# EUROPEAN PATENT APPLICATION

(11) **EP 2 579 219 A1**
(43) Date of publication of application: **10.04.2013**
(21) Application number: 10852481.0
(22) Date of filing: 14.12.2010
(51) Int. Cl.: G07C 5/04, B60R 16/02, G01C 23/00, G07C 5/00, G08G 1/00

(54) **DIGITAL TACHOGRAPH**

(30) Priority: 02.06.2010 JP 2010126448
(71) Applicant: Hishiki Transport Co., Ltd., Sousa-shi, Chiba 289-1143 (JP)
(72) Inventor: HISHIKI, Hirokazu, Chiba 289-1143 (JP); SEKI, Saburo, Fujisawa-shi Kanagawa 252-0816 (JP)
(74) Representative: Sajda, Wolf E.
(86) International application number: PCT/JP2010/007261
(87) International publication number: WO 2011/151870

(57) **Abstract**

A digital tachograph installed in a vehicle of a transportation company having a duty to install the tachograph. The tachograph comprises a body, a work state calculation device capable of calculating work state data connected to the body, a compliance determination device connected to the work state calculation device for determining whether a labor condition of a driver of the vehicle fulfills a condition provided by law based on the work state data, a storage for recording determination results determined by the compliance determination device and the work state data, and a display connected to the body capable of displaying and informing the driver of at least one determination result determined by the compliance determination device before breaching the law. The at least one determination result relates to, for example, on-duty time, residual on-duty time, rest period, residual rest period, driving time, residual driving time, or continuous driving time, etc.

## Description

### CROSS-REFERENCE TO RELATED APPLICATION

This is a national phase application of PCT/JP2010/007261 filed December 14, which claims priority to the Japanese Patent Application No. 2010-126 448 filed June 2, 2010, the contents of which is incorporated herein by reference in its entirety.

### BACKGROUND OF THE INVENTION

### 1. Field of the Invention

The present invention relates to a digital tachograph installed in vehicles, such as taxis, buses, and trucks of transportation companies which have a duty to install a tachograph in the vehicles.

### 2. Description of the Related Art

Conventional digital tachographs numerically take records of driving data, including all of legal 3 elements(time, distance, and speed), and record them on a memory card. The driving data is read in a personal computer after the end of driving, and an operation administrator analyzes the safety and the economical efficiency of the driving with analysis software.

Thus, digital tachographs have been widely spread and improved from points of view of the economical efficiency and the safety of transportation. As to working time and other labor conditions for automobile drivers, these matters are considered to be elements for causing traffic accidents in many cases.

Accordingly, as part of measures to prevent accidents, "Standards for Improvement of Working Time, etc., for Automobile Drivers (Notification No. 7 by the Ministry of Labor)" (hereinafter referred to as the Labor Standards Ordinance) was issued in February, 1989.

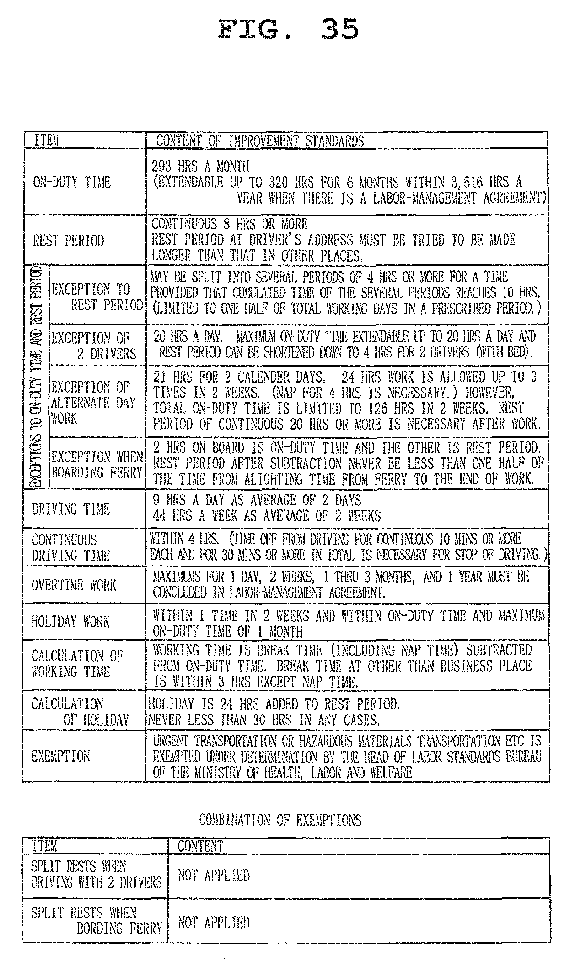

Then, it was revised in part by Notification No. 4 by the Ministry of Labor as of January 30, 1997 through experiencing revisions in 1991 and 1992 and was established as Notification No. 1365 by the Minister of the Ministry of Land, Infrastructure, Transport and Tourism of August 20, 2001. The outline at the time of filing this application is shown in FIG. 35 and the following description.

### On-duty_time

The term "on-duty time" means a period from the time of leaving the garage to the time of returning to the garage, including break time. The term "break time" means a total of periods wherein a state of vehicle speed of 0 km/h continues for 10 minutes or more. The on-duty time must basically be within a limit of 13 hours a day.

Exceptionally, this limit can be extended up to a maximum of 16 hours, provided that the number of days wherein the on-duty time exceeds 15 hours does not exceed 2 times a week. The on-duty time also must basically be within a limit of 293 hours a month. Exceptionally, this limit can be extended up to 320 hours for 6 months in 1 year when there is a labor-management agreement, provided that the on-duty time of 1 year does not exceed 3516 hours.

### Rest period

The term "rest period" means a period from the time of returning to the garage to the following time of leaving the garage. The rest period must be tried to be taken such that it continues 8 hours or more and the rest period at driver's address becomes longer than that in other places. Note that 1 day is defined as 24 hours from the time of leaving the garage.

### Holiday

The term "holiday" means a continuous period of a rest period + 24 hours. This continuous period shall not be less than 30 hours in any cases, and holidays must be acquired at least once in 2 weeks.

### Driving time

Driving time a day must not exceed 9 hours (average for 2 days), and driving time a week must not exceed 44 hours (average for 2 weeks). A continuous driving must be less than 4 hours. Time off from driving for continuous 10 minutes or more each time and for 30 minutes or more in total is necessary for a cessation of a continuous driving.

### Working on holiday

Working on holiday is allowed 1 time in 2 weeks.

### Overtime working

As to overtime working, maximums for 1 day, 2 weeks, 1 through 3 months, and 1 year must be concluded in a labor-management agreement. Here, as to businesses, such as urgent transportation or hazardous materials transportation, application is exempted under a determination by the Head of the Labor Standards Bureau of the Ministry of Health, Labor and Welfare. Further, there are following exceptions to the on-duty time and the rest period.

### Exception to the rest period

Only in cases where inevitable business necessity exists, the rest period is allowed to be split into several periods of 4 hours or more each time for a time provided that the cumulated time of the several periods reaches 10 hours. This is limited to one half of total working days in a prescribed period.

### Exception of 2 drivers

In cases of 2 drivers (with bed), the maximum on-duty time can be extended up to 20 hours a day, and the rest period can be shortened down to 4 hours.

### Exception of alternate day work

Working for 24 hours is allowed up to 3 times in 2 weeks. In this case, a 4 hours nap at night is necessary. However, the total on-duty time is limited to 126 hours in 2 weeks. A rest period of continuous 20 hours or more is necessary after work.

### Exception when boarding ferry

Two hours during boarding a ferry are treated as the on-duty time, and the other period is treated as the rest period. However, the rest period after subtraction must not be less than one half of the period from the alighting time from the ferry to the time of end of work. As to combination of exceptions, the exception of two drivers concerning the split rests and the exception of boarding ferry concerning the split rests are not simultaneously applicable.

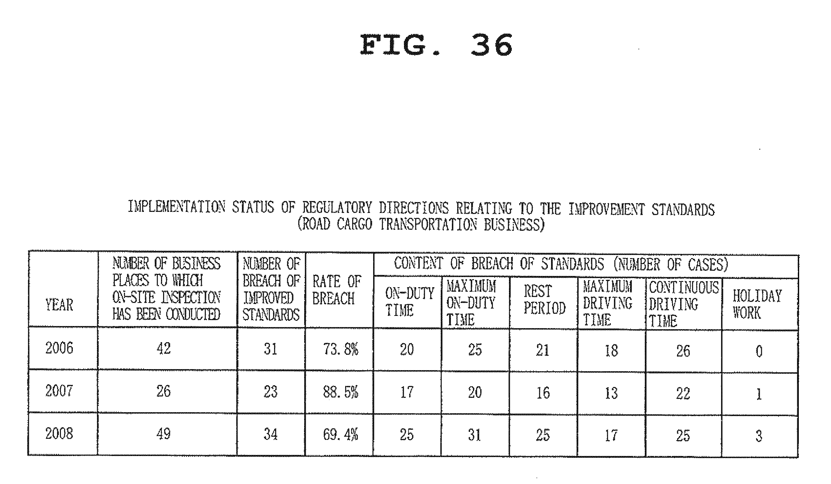

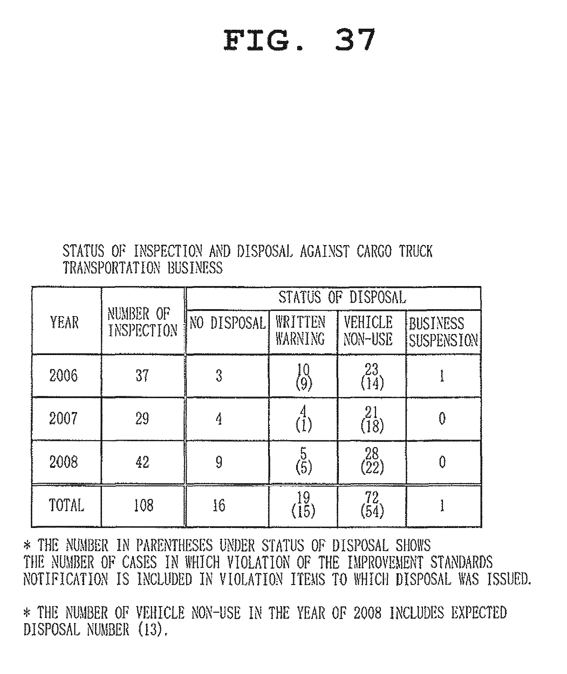

The compliance status of cargo truck transportation business companies with the Labor Standards Ordinance is not enough as shown in FIG. 36, therefore it is in a status where written warnings, vehicle non-use sanctions, or business suspension sanctions have been or will be issued against them as shown in FIG. 37.

Especially in 2005, major accidents and troubles by human errors happened in succession in the air transportation business and the shipping transportation business in addition to the JR West Japan Fukuchiyama Line derailment accident.

Therefore, in order that much more safety of transportation may be secured the Ministry of Land, Infrastructure, Transport and Tourism started a Transportation Safe Management System from October 2006, also announced "the General Safety Plan 2009 for Business Automobiles" in March 2009, and put emphasis on advancement of the operation management by utilizing digital tachograph as one of the important measures.

However, conventional digital tachographs do not comprise a technical mechanism for monitoring a compliance status with the Labor Standards Ordinance and promoting a compliance with the Labor Standards Ordinance in real time during driving. Therefore, as shown in FIG. 37, it is said that the cargo truck transportation business companies are in a situation where complying with the Labor Standards Ordinance is very difficult.

Especially, although the Labor Standards Ordinance prescribes the time or periods and the number of times regarding the conditions and exceptional conditions concerning the treatment of the on-duty time, the rest period, the driving time, the continuous driving time, the working on holiday, and holidays, etc., of drivers, the time or periods and the number of times concerning these conditions are dynamically changing by every day's driving.

Therefore, it is very difficult for an operation administrator to understand driver's daily work records certainly and to plan a schedule of the driver for the following day so that the driver will correctly comply with the Labor Standards Ordinance. Similarly, although drivers understand most about their work, it is also very difficult for them to understand the time or periods and the number of times of daily work correctly, perform complicated calculation based on them, and determine whether or not the conditions prescribed by the Labor Standards Ordinance are fulfilled.

### SUMMARY OF THE INVENTION

The present invention was made in light of the foregoing. Accordingly, it is an object of the present invention to provide a digital tachograph for presenting information on a presentation device so that a driver can drive with fulfilling a condition provided by a labor standard law, thereby enabling the driver to observe the information presented by the presentation device and perform driving fulfilling the condition provided by the labor standard law as well as safe driving.

The above and other objects and new features of the present invention will become more fully apparent by reading the following description with reference to the accompanying drawings. Note that the drawings should not be used for the purposes of limiting the scope of claims since they are provided only for illustration.

According to an aspect of the invention, there is provided a digital tachograph installed in a vehicle of a transportation company having a duty to install the tachograph, comprising: a digital tachograph body; a work state calculation device capable of calculating work state data connected to the digital tachograph body; a labor standard law compliance determination device connected to the work state calculation device for determining whether a labor condition of a driver of the vehicle of the transportation company fulfills a condition provided by a labor standard law based on the work state data calculated by the work state calculation device; a storage device for recording determination results determined by the labor standard law compliance determination device and/or the work state data of the work state calculation device; and a presentation device connected to the digital tachograph body capable of presenting automatically at least one determination result determined by the labor standard law compliance determination device before breaching the labor standard law, the at least one determination result relating to any one of items of on-duty time, residual on-duty time, rest period, residual rest period, driving time, residual driving time, continuous driving time, residual continuous driving time, break time, residual break time, total break time, and residual break time necessary for cessation of driving.

As apparent from the above description, following effects can be obtained based on the present invention.
1) Drivers can know their driving conditions for fulfilling the conditions provided by a labor standard law. Therefore, the driver can understand his driving schedule that is gradually changing by traffic congestion after leaving the garage, etc., by the presentation by the presentation device, calculation of conditions provided by the labor standard law becomes unnecessary, and a driving complying with the labor standard law will be promoted without imposing a burden on the driver.
2) According to item 1), since the driver can check easily the data calculated by the labor standard law compliance determination device with the presentation device, it will be prevented that the driver changes his driving schedule by his own determination, and the driver will be urged to comply with the driving schedule planned by his transportation company based on law.
3) According to item 1), the work state data and the data calculated by the labor standard law compliance determination device can be recorded on the storage device. Therefore, using the storage device, the driving administrator can prepare easily written instructions on driving for the driver's next driving that will comply with the labor standard law, and can give the driver the written instructions.
4) The same effects as the above-mentioned items 1) to 3) are obtained according to the invention as defined in claim 2.
5) The same effects as the above-mentioned items 1) to 3) are obtained according to the invention of claim 3. Further, since the determination results of the current state of the driver, such as driving time, break time, on-duty time, and/or next leaving-the-garage time, are presented on the presentation device, the driver can know correctly what time he can leave the garage next day and how much the on-duty time remains at a glance. Therefore, driving that complies with the labor standard law will be easy.
6) Since a work state monitoring and controlling device connected to the work state calculation device for monitoring a state of a driver and notifying a current state of the driver to the labor standard law compliance determination device is used, extension of function, change of numerical values according to legal amendments, etc., will be easily made by only correcting the work state monitoring and controlling device. Therefore, a measure can be easily taken for change of numerical values, such as on-duty time, and change of control items according to legal amendments.
7) The same effects according to the above-mentioned items 1) to 6) are obtained according to the invention of claim 4 or 5.
8) The same effects according to the above-mentioned items 1) to 6) are obtained according to the invention of claim 6. Further, the driver of the transportation company's vehicle can know certainly the condition for fulfilling a condition provided by the labor standard law by eyes and an ear with a monitor and a sound presentation device of the presentation device.
9) The same effects according to the above-mentioned items 1) to 6) are obtained according to the invention of claim 7. Further, conditions can be individually set for each driver of vehicles of the transportation company.

### BRIEF DESCRIPTION OF THE DRAWINGS

- FIG. 1: is an explanatory view of a first embodiment for implementing the present invention;
- FIG. 2: is a block diagram of the first embodiment for implementing the present invention;
- FIG. 3: is an explanatory view of the body of a digital tachograph according to the first embodiment for implementing the present invention;
- FIG. 4: is an explanatory view of a work information input device according to the first embodiment for implementing the present invention;
- FIG. 5: is a state transition diagram concerning the usual work relating to the first embodiment for implementing the present invention;
- FIG. 6: is a program flow chart according to the first embodiment for implementing the present invention;
- FIG. 7: is a rest acquisition determination flow chart according to a first embodiment for implementing the present invention;
- FIG. 8: is a rest acquisition determination flow chart relating to the alternate day work according to the first embodiment for implementing the present invention;
- FIG. 9: is a rest acquisition determination flow chart in cases of 2 drivers according to the first embodiment for implementing the present invention;
- FIG. 10: is a table showing warning examples regarding the rest acquisition according to the first embodiment for implementing the present invention;
- FIG. 11: is a holiday acquisition determination flow chart according to the first embodiment for implementing the present invention;
- FIG. 12: is a table showing warning examples regarding the holiday acquisition according to the first embodiment for implementing the present invention;
- FIG. 13: is an on-duty time determination flow chart according to the first embodiment for implementing the present invention;
- FIG. 14: is an on-duty time determination flow chart in cases of the alternate day work according to the first embodiment for implementing the present invention;
- FIG. 15: is an on-duty time calculation flow chart according to the first embodiment for implementing the present invention;
- FIG. 16: is a table showing warning examples regarding the on-duty time according to the first embodiment for implementing the present invention;
- FIG. 17: is a driving time determination flow chart according to the first embodiment for implementing the present invention;
- FIG. 18: is a table showing warning examples regarding the driving time according to the first embodiment for implementing the present invention;
- FIG. 19: is an explanatory view showing a presentation state of a presentation device according to the first embodiment for implementing the present invention;
- FIG. 20: is an explanatory view of a second embodiment for implementing the present invention;
- FIG. 21: is a block diagram of the second embodiment for implementing the present invention;
- FIG. 22: is an explanatory view of the work information input device according to the second embodiment for implementing the present invention;
- FIG. 23: is an explanatory view of a third embodiment for implementing the present invention;
- FIG. 24: is a block diagram of the third embodiment for implementing the present invention;
- FIG. 25: is an explanatory view of a fourth embodiment for implementing the present invention;
- FIG. 26: is a block diagram of the fourth embodiment for implementing the present invention;
- FIG. 27: is an explanatory view of a fifth embodiment for implementing the present invention;
- FIG. 28: is a block diagram of the fifth embodiment for implementing the present invention;
- FIG. 29: is an explanatory view of a sixth embodiment for implementing the present invention;
- FIG. 30: is a block diagram of the sixth embodiment for implementing the present invention;
- FIG. 31: is an explanatory view of a seventh embodiment for implementing the present invention;
- FIG. 32: is a block diagram of the seventh embodiment for implementing the present invention;
- FIG. 33: is an explanatory view of an eighth embodiment for implementing the present invention;
- FIG. 34: is a block diagram of the eighth embodiment for implementing the present invention;
- FIG. 35: is a table showing the outline of improvement criteria for improving working time of drivers;
- FIG. 36: is a table showing an implementation status of regulatory directions relating to the Improvement Standards (road cargo truck transportation business); and
- FIG. 37: is a table showing the status of inspection and sanction against cargo truck transportation business companies.

### DETAILED DESCRIPTION OF THE PREFERRED EMBODIMENTS

Hereinafter, the present invention will be described in detail in accordance with the embodiments of the present invention shown in the drawings. Note that, in the following embodiments of the present invention, description will be made in accordance with labor conditions of truck driver as examples.

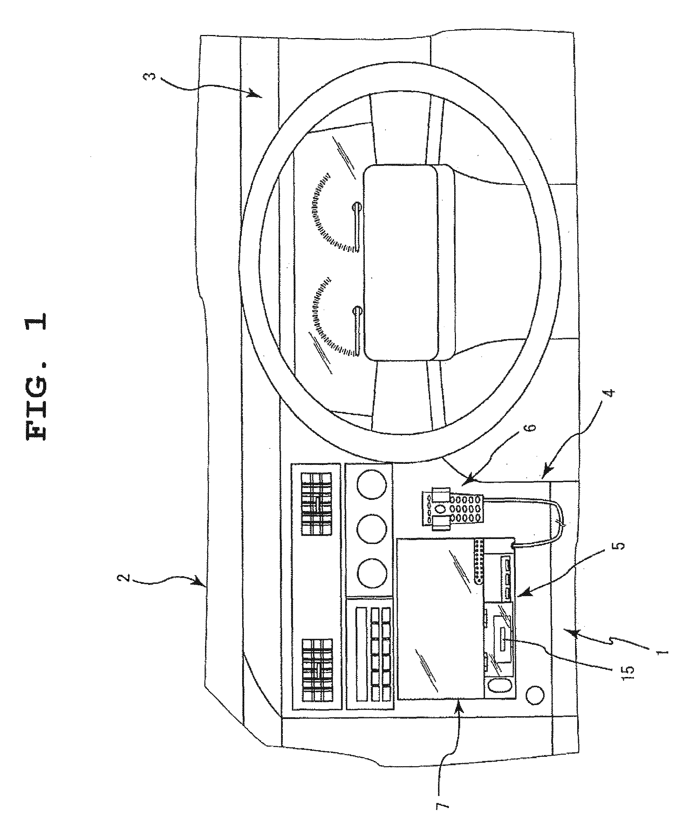

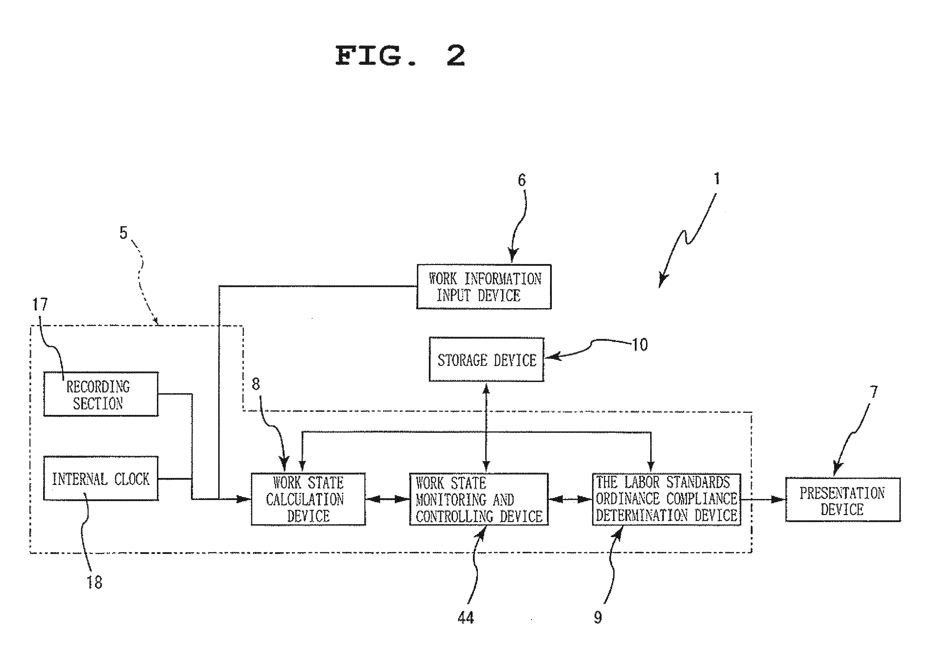

In a first embodiment of the present invention shown in FIGs. 1 to 19, a reference numeral 1 refers to a digital tachograph of the present invention. This digital tachograph 1 comprises a digital tachograph body 5 positioned on a console panel 4 of a driver's seat 3 in a vehicle 2 of a transportation company which has a duty to install a tachograph in the vehicle 2 so that the driving data of time, distance, and speed can be recorded, a work information input device 6 connected to the digital tachograph body 5, and a presentation device 7 connected to the digital tachograph body 5 and positioned on the console panel 4.

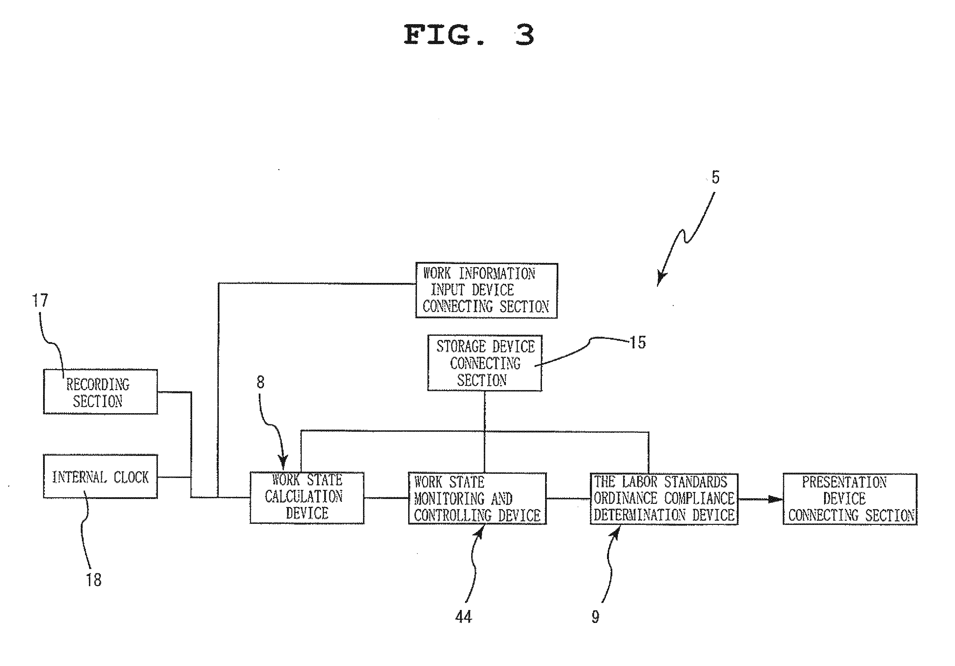

As shown in FIG. 3, the digital tachograph body 5 comprises a recording section 17 for recording legal 3 elements of the driving time, distance, and speed, a work state calculation device 8 for obtaining the legal 3 elements of the driving time, distance, and speed from the recording section 17 and calculating work state data, such as on-duty time and driving time, a Labor Standards Ordinance compliance determination device 9 for determining, in cooperation with the work state calculation device 8, whether or not the conditions provided by the Labor Standards Ordinance are fulfilled based on the work state data calculated by the work state calculation device 8, wherein the labor conditions provided by the Labor Standards Ordinance regarding the driver of the vehicle 2 of the carrier are recorded on the work state calculation device 8, a work state monitoring and controlling device 44 which cooperates with the work state calculation device 8 and the Labor Standards Ordinance compliance determination device 9 and monitors the present state of the driver, and a storage device 10 comprising a portable media, such as a floppy disk, a compact flash, a memory stick, an SD memory card, and a Smart Media, and for digitally storing determination results determined by the Labor Standards Ordinance compliance determination device 9 and/or the work state data of the work state calculation device 8.

Here, the portable storage device 10 is prepared for each driver so that each storage device 10 stores each driver's information. When the digital tachograph body 5 is equipped with the storage device 10, the history or the like of driver's driving data will be output to the Labor Standards Ordinance compliance determination device 9.

The work state calculation device 8 obtains the legal 3 elements of the driving time, distance, and speed from the recording section 17, obtains current state information of the driver from the work information input device 6, calculates work state data, such as the on-duty time and/or the driving time, and sends the calculation results and the state to the Labor Standards Ordinance compliance determination device 9.

What is important concerning the work state calculation section is what should be used as a basis period. The relation between the rest period and the on-duty time is: 24 hours = the rest period + the on-duty time. The rest period is a period between a work and a following work, and the on-duty time is a period from the start time to the end time. Both can be obtained as raw data. Therefore, both periods can be considered eligible for a basis period. However, when the outline of the periods and time specified by the Labor Standards Ordinance of FIG. 35 is taken into consideration, the rest period should be the basis period.

This is since the decision of the on-duty time is not made at the time of end of work but it is calculated as 24 hours from the start of work. For example, in a case where a work starts from 8:00 a.m. on Monday and starts from 6:00 a.m. on Tuesday, the period of the on-duty time of Monday is calculated as the period until 8:00 a.m. on Tuesday. Therefore, the on-duty time of 2 hours from 6:00 a.m. to 8:00 a.m. on Tuesday is incorporated in the on-duty time of Monday.

As a result of this, the above-mentioned definition that the period from the time of start to the time of end is the on-duty time is not true in this case. That is, the definition that the on-duty time is the period from the time of start to the time of end may be true in some cases and may not be true in other cases. Therefore, it cannot be used as a period as an absolute basis. On the other hand, the definition of the rest period is always true. For this reason, when performing supervisor control of the compliance with the Labor Standards Ordinance of FIG. 35, we should consider the rest period as a basis. Accordingly, the rest period is used as a basis period in the digital tachograph of the present invention.

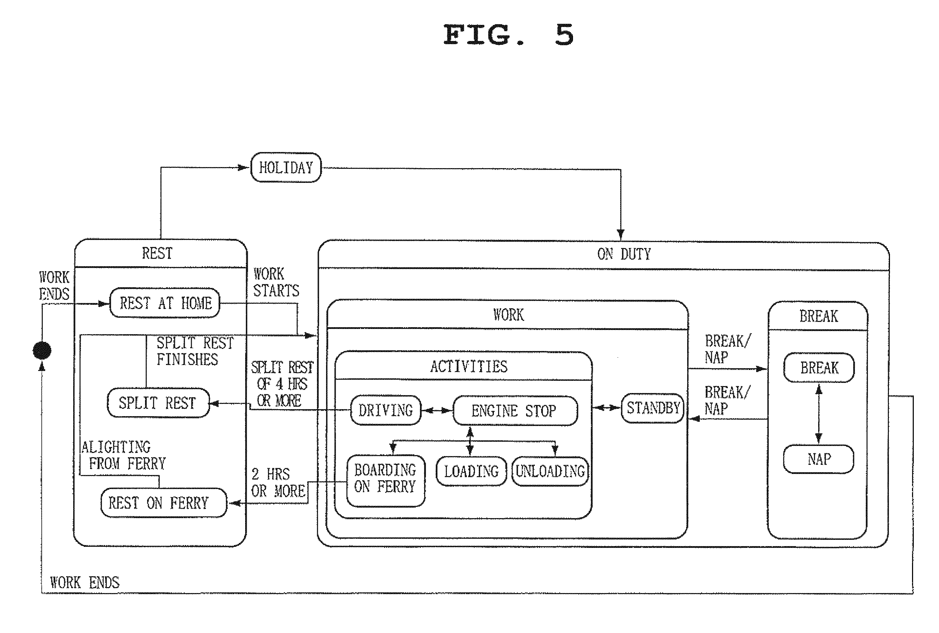

The work state monitoring and controlling device 44 serves as a principal part of the present invention, and an essential point of this device 44 is that it realizes the content regarding the Labor Standards Ordinance of FIG. 35 as "transitions of states of driver" using the art of the state transition diagram used in software design. More specifically, it is important to express the content of the Labor Standards Ordinance of FIG. 35 using the state transition diagram of UML which is a modeling language in software design. This example is shown in FIG. 5. FIG. 5 expresses correctly the states of driver provided by the Labor Standards Ordinance of FIG. 35.

Thereby, the working time provided by the Labor Standards Ordinance of FIG. 35 can be expressed in the state transition diagram. Since the state transition diagram can express transitions of work states of driver and the period of the work states, it becomes possible to perform the supervisor control of work states of driver.

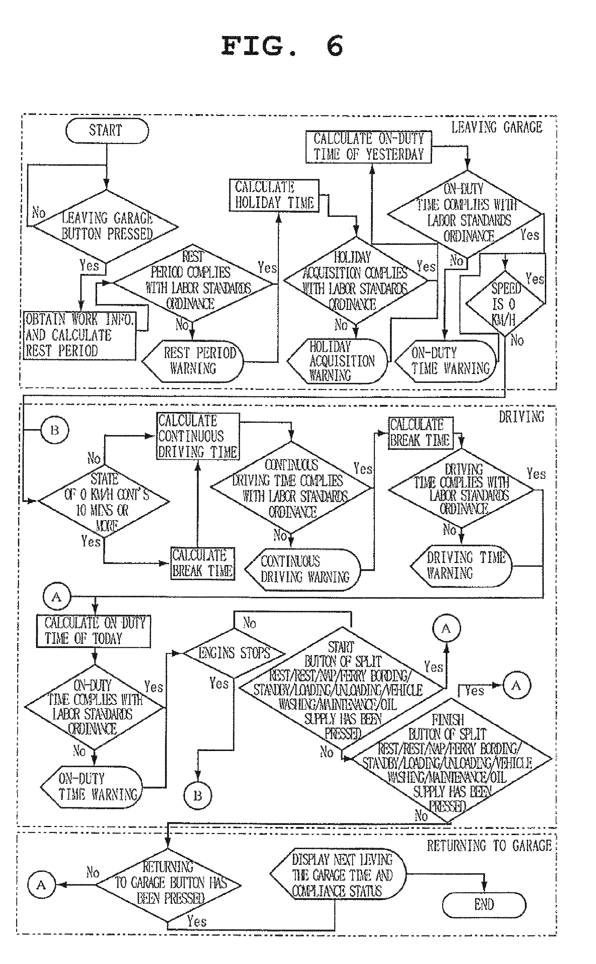

More specifically, as shown in the flow charts of FIGs. 6 to 18, the compliance status with the Labor Standards Ordinance can be determined and warning messages for promoting compliance can be issued. Although this determination is made by the Labor Standards Ordinance determination device 9, recognition of the status of driver provided by the Labor Standards Ordinance used as elements of that determination and supervisor control are performed by the work state monitoring control device 44.

That is, the work state monitoring and controlling device 44 determines in which state of the state transition diagram shown in FIG. 5 the driver currently exists based on the work state calculation data of the work state calculation device 8, and makes the Labor Standards Ordinance determination device 9 determine whether or not the work state complies with the Labor Standards Ordinance. The Labor Standards Ordinance compliance determination device 9 can also make determinations as to exceptions, etc.

As described in accordance with the above-mentioned work state monitoring and controlling device 44, by realizing the Labor Standards Ordinance of FIG. 35 from the viewpoint of the state transition diagram of driver, a flow chart can express the Labor Standards Ordinance expressed in text.

The subject which determines the status of compliance by the flow chart is the Labor Standards Ordinance compliance determination device 9. Flow charts are shown in FIGs. 6 to 18. However, before explaining these flow charts, the state transition diagram and the work state monitoring and controlling device 44 which are important points of the present invention will be further explained.

The point of explanation is why the state transition diagram is used for expressing the Labor Standards Ordinance in spite of the fact that the compliance status can be determined by the flow charts and, as to the work state monitoring and controlling device 44, why the work state monitoring and controlling device 44 is provided in spite of making determination of a compliance status by the Labor Standards Ordinance compliance determination device 9.

To tell the conclusion first, the reasons for these matters are the fact that the Labor Standards Ordinance is very complicated as shown in FIG. 35. In order to solve this complexity, the state transition diagram and the work state monitoring and controlling device 44 are used.

The complexity of Labor Standards Ordinance is that there are four special exceptions: 1) Exception to Rest Period; 2) Exception of 2 Drivers; 3) Exception of Alternate Day Work; and 4) Exception of Ferry Boarding. These four exceptions cause the complexity.

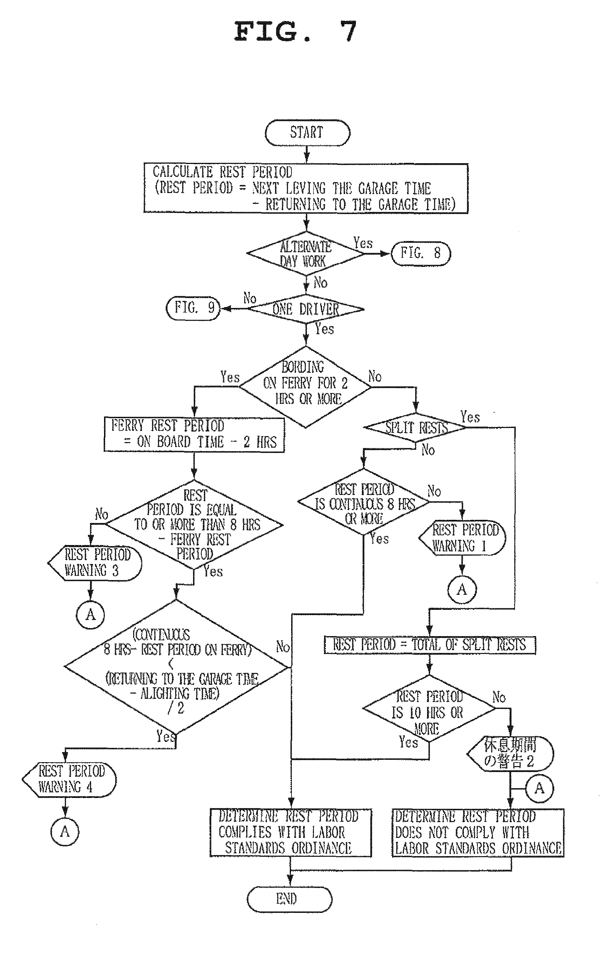

Specifically, it is shown in the flow charts of the rest acquisition determination in FIG. 7, FIG. 8, and FIG. 9. As shown in FIG. 7, the rest period is calculated as: "the rest period = the following time of leaving the garage - the time of returning to the garage," As shown in FIG. 7, in the case where no exception exists, the rest period is simply determined only as to "whether or not it is continuous 8 hours or more."

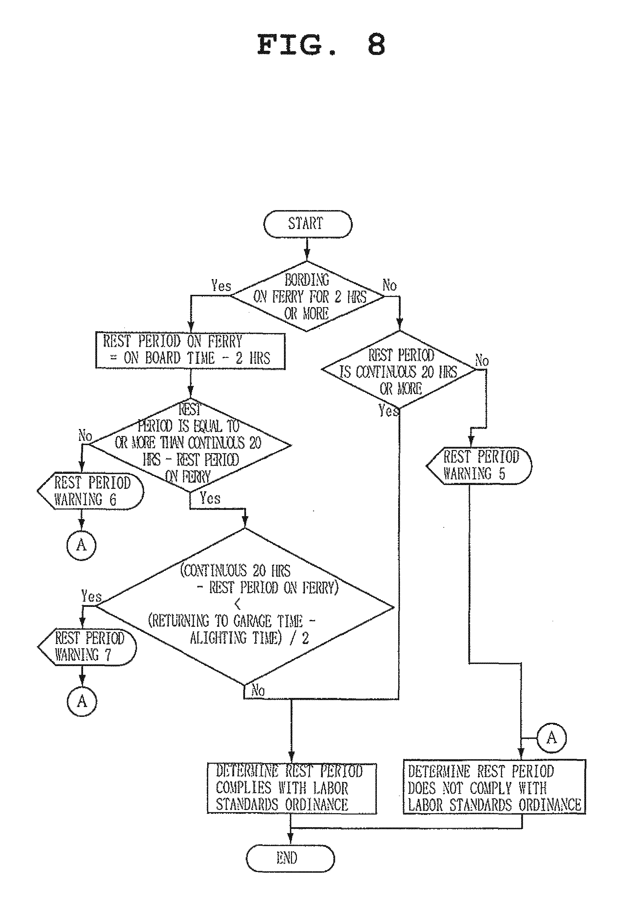

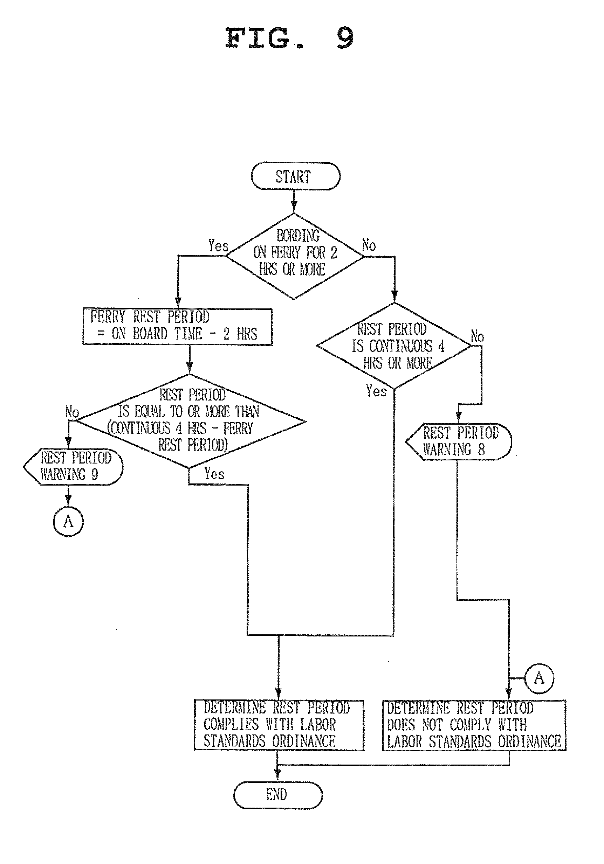

However, in cases where four exceptions are taken into consideration, since, in addition to FIG. 7, determinations in the case of alternate day work of FIG. 8, determinations in the case of two drivers of FIG. 9, and for each of these cases, determinations in the case of split rests and boarding ferry are included, complications occur.

Thus, flow charts for the four exceptions are very complicated. Therefore, it is very difficult to understand all these flow charts intuitively. Then, this difficulty brings about simple and honest question or uneasiness. The question or uneasiness is whether these flow charts are really correct. The question or uneasiness is very serious for the digital tachograph of the present invention which determines a compliance with the Labor Standards Ordinance, and a solution to that must be provided.

A solution is the state transition diagram. A state transition diagram is art which expresses complicated operations simply, however correctly, and is used by UML which is the modeling language of software design as above-mentioned. However, the importance is not recognized about simple operations. Specifically, although there are two states of Rest at home and On-duty exist in the case with no exceptions as shown in FIG. 5, these two states are not concerned generally. Since having a rest at home is natural we are not conscious of the state of rest at home in everyday life.

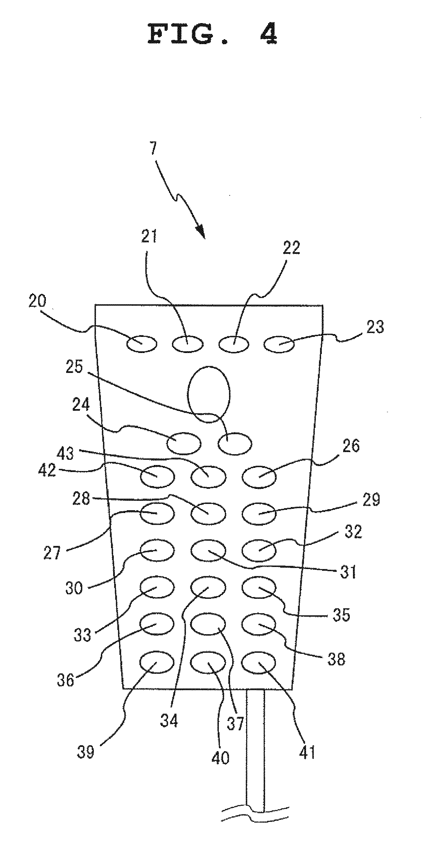

Further, although there are two states of work and break during the work, the state of work further comprises two states of active and inactive (standby), wherein the state of active further comprises states of driving, stop, stop to loading, unloading, and boarding ferry, and further as shown in FIG. 4, states of vehicle washing, maintenance, and oil supply, these are all included in one state of on-duty. When we are in one state, we are not usually conscious of it.

That is, although we can think of states, such as driving, loading, unloading, standby, or break, as a state of the driver, we are not conscious that we are in the on-duty state. That is, in a simple case without an exception, it is not necessary to consider states and transitions between them, i.e., a state transition diagram. However, in cases where an exception exists, that is not true. The thing which simply shows a feature of the exceptions is a state.

Specifically, transitions to the state of rest from the state of on-duty, for example the transition to the state of divisional rests of 4 hours or more from the state of driving, and the transition to the state of rest at ferry from the state of boarding ferry, are shown in FIG. 5. The thing which can show clearly the above is the state transition diagram.

Further, the state transition diagram involves another important merit. That is, as shown in FIG. 5, the state transition diagram covers all the states of the driver, such as rest, holiday, and on-duty. The state of on-duty includes the states of work and break, and the state of work includes the states of active and standby. Needless to say, the Labor Standards Ordinance covers all the states of the driver, and specifies the periods of the states.

Covering all the states of the driver and the periods of them by the Labor Standards Ordinance and the completeness of the state transition diagram exactly correspond each other. The Labor Standards Ordinance is expressed by the state transition diagram based on this correspondence. Specifically, it is expressed as shown in FIG. 5.

Operations expressed with the state transition diagram as shown in FIG. 5 can be treated as software as computer science, software engineering, and the modeling language of UML actually teach and show. The above-mentioned flow charts show the operations of this software. That is, validity can be given to flow charts by creating them from the state transition diagram of FIG. 5. Thereby, the above-mentioned question or uneasiness about flow charts will be overcome. This is the advantage which expresses the Labor Standards Ordinance in the state transition diagram.

Next, the work state monitoring and controlling device 44 will be explained. In order to explain plainly the necessity for the work state monitoring and controlling device 44, explanation is made taking the case of split rests as an example and supposing a case where the work state monitoring and controlling device 44 does not exist. For example, it is supposed that the driver presses a split rest start button of the work information input device 6 shown in FIG. 4, and restarts driving by pressing a finish button of split rest since the driver feels totally refreshed by having a split rest.

In this case, the work state calculation device 8 calculates a rest period from the time when the split rest start button was pressed and the time when the split rest finish button was pressed and sends it to the Labor Standards Ordinance compliance determination device 9, and determinations are made by the device 9.

Suppose that a determination result is that the rest is not treated as a split rest since the rest period is 3 hours and 59 minutes. Further, suppose that the total time of split rests were 9 hours and 59 minutes. Therefore, it will be determined that the Labor Standards Ordinance is not complied with. In these cases, the Labor Standards Ordinance is not complied with for only 1 minute shortages.

Therefore, the driver would be dissatisfied for being unable to understand the reasons for having taken the rest for 3 hours and 59 minutes. The work state monitoring and controlling device 44 solves this problem. That is, the work state monitoring and controlling device 44 monitors the state of a split rest and measures the period for it, and notifies the driver such that the rest period would satisfy the Labor Standards Ordinance. Thereby, the problem will be solved.

Note that it is an actual case where the regulatory authority points out an incompliance with the Labor Standards Ordinance because of 1 minute shortage. Here, an important thing is that the digital tachograph 1 recognizes the work state of the driver and notifies such that the state becomes compliant with the Labor Standards Ordinance, that is, states of the driver are controlled. For that purpose, the work state monitoring and controlling device 44 needs to understand the Labor Standards Ordinance correctly, and more specifically, it is necessary for the work state monitoring controlling device 44 to be based on the state transition diagram of FIG. 5.

Accordingly, the exception of the above-mentioned divisional rests can be appropriately dealt with, thus the problem of 1 minute shortage can be prevented. Second reason for the necessity of the work monitoring and controlling device 44 is that it is necessary when the compliance status confirmation button of FIG. 4 is pressed. In order to plan the schedule of the future work the driver needs information, including residual on-duty time, continuous driving time, the above-mentioned residual time period required to be taken for the split rest, and a following legal time of leaving the garage.

Especially, the residual time period for the split rest and the following legal time of leaving the garage are very important information in order for the driver to know a work plan or the time he must go to the office next day. As to the following legal time of leaving the garage, in cases where no exception exists, calculation is easy since it is necessary only to take a rest at home for 8 hours.

However, in cases where exceptions exist, for example in case where an exception of boarding ferry exists, calculations will be complicated since a ferry rest period must be subtracted from 8 hours and the subtracted rest period must not be less than one half of the period from alighting from the ferry to the end of work. What is important here is to recognize the state of on-boarding the ferry. Therefore, the work state monitoring and controlling device 44 is necessary. Next, flow charts regarding determinations by the Labor Standards Ordinance compliance determination device 9 will be explained.

FIG. 6 shows an entire flow chart. What is important here is a determination is made at the time of leaving the garage. The reason for this is, as explained in relation to the above-mentioned work state calculation device 8, the determination concerning the Labor Standards Ordinance is made at the time of not an end but a start of work.

Specifically, the flow is as follows. At first, at the time of leaving the garage, calculating the rest period as a basis, determining a compliance status, calculating and determining holiday time, and calculating and determining on-duty time. Next, during driving, calculation and determination of driving time, on-duty time, and loading and unloading periods during stop are performed. These processes form the entire flow. Next, along with the flow charts, the flow of promoting the Labor Standards Ordinance compliance will be explained as to the four important items specified by the Labor Standards Ordinance: rest period, holiday acquisition, on-duty time, and driving time.

### Determination Flow of Rest Period

When the driver inputs information of leaving the garage with the work information input device 6, the work state calculation device 8 extracts the time of leaving the garage from the internal clock 18 of the digital tachograph body 5. The work state calculation device 8 asks the storage device 10 about the last time of returning to the garage, calculates a rest period based on the last time of returning to the garage and the time of leaving the garage, and sends it to the Labor Standards Ordinance compliance determination device 9 and makes it carry out a determination.

As shown in FIG. 7, the Labor Standards Ordinance compliance determination device 9 firstly performs determinations about whether the work is alternate day work and whether the work is performed by one driver (when NO for alternate day work). Flows for cases of alternate day work and for cases where the vehicle is not driven by one driver will be described later.

Next, whether the driver has boarded a ferry is determined. In the case where the driver has not boarded a ferry, whether or not split rests have been taken, or whether or not a rest has been taken several times is determined. In the case where no split rests have been taken, whether a calculated rest period is 8 hours or more is determined. That is, in the case where a rest has been taken, whether the calculated rest period is 8 hours or more is determined. As a result of this, if the rest period is 8 hours or more, it is determined that the rest period complies with the Labor Standards Ordinance.

In the case where the rest period is less than 8 hours, the Labor Standards Ordinance compliance determination device 9 presents "Rest Period Warning 1" on the presentation device 7, and it is determined that the rest period does not comply with the Labor Standards Ordinance. In the case where split rests have been taken, it is determined whether a rest period of 10 hours or more has been taken as a total of the split rests of 4 hours or more.

As a result of this, in the case where the rest period of 10 hours or more has been taken as a total of the split rests of 4 hours or more, it is determined that the rest period complies with the Labor Standards Ordinance. On the contrary, in the case where the rest period of 10 hours or more has not been taken as a total of the split rests of 4 hours or more, the Labor Standards Ordinance compliance determination device 9 presents "Rest Period Warning 2" on the presentation device 7, and it is determined that the rest period does not comply with the Labor Standards Ordinance.

In the case where the driver has boarded a ferry, the Labor Standards Ordinance compliance determination device 9 determines whether or not the rest period is equal to or more than the period of ferry rest period subtracted from continuous 8 hours. In the case where the rest period is equal to or more than the period of ferry rest period subtracted from continuous 8 hours, it is determined that the rest period complies with the Labor Standards Ordinance.

In the case where the rest period is less than the period of ferry rest period subtracted from continuous 8 hours, it is determined that the rest period does not comply with the Labor Standards Ordinance while "Rest Period Warning 3" is presented on the presentation device 7, and determinations relating to the rest period is finished.

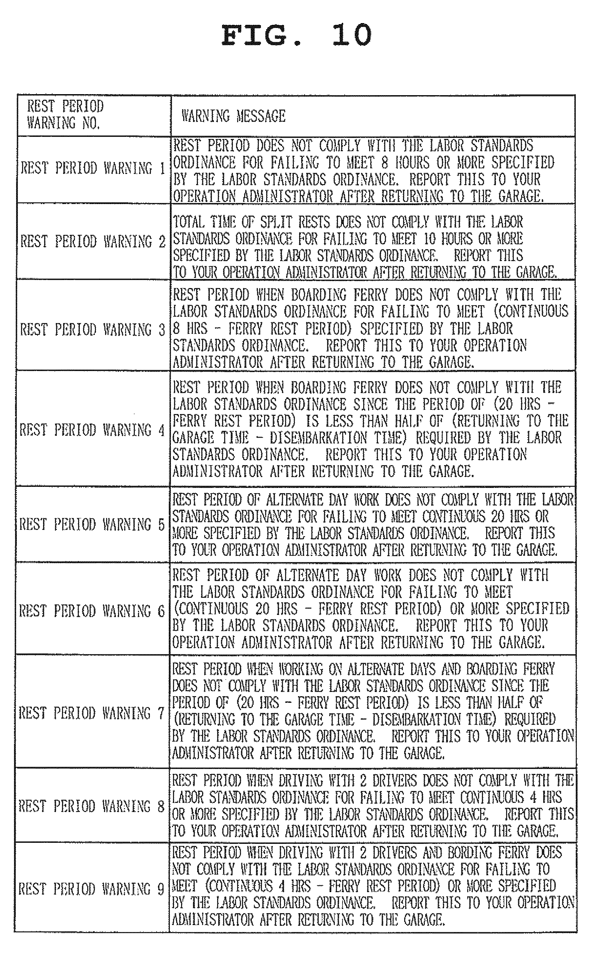

As shown in FIG. 10, for example, the following warning message is presented: "REST PERIOD DOES NOT COMPLY WITH THE LABOR STANDARDS ORDINANCE FOR FAILING TO MEET 8 HOURS OR MORE SPECIFIED BY THE LABOR STANDARDS ORDINANCE. REPORT THIS TO YOUR OPERATION ADMINISTRATOR AFTER RETURNING TO THE GARAGE."

### Determination Flow Regarding Rest Period of Alternate Day Work

At first, the Labor Standards Ordinance compliance determination device 9 determines whether or not the driver has boarded a ferry. In the case where the driver has not boarded a ferry, it is determined whether or not the rest period is equal to or more than continuous 20 hours. In the case where the rest period is equal to or more than continuous 20 hours, it is determined that the Labor Standards Ordinance is complied with.

In the case where the rest period is not equal to or more than continuous 20 hours, it is determined that the Labor Standards Ordinance is not complied with while "Rest Period Warning 5" is presented on the presentation device 7, and determination relating to the rest period is finished.

In the case where the driver has boarded a ferry, the Labor Standards Ordinance compliance determination device 9 determines whether the rest period of the driver is equal to or more than the period of ferry rest period subtracted from 20 hours. In the case where the rest period is less than the period of ferry rest period subtracted from 20 hours, it is determined that the Labor Standards Ordinance is not complied with while "Rest Period Warning 6" is presented on the presentation device 7, and determination relating to the rest period is finished.

On the contrary, in the case where the rest period is equal to or more than the period of ferry rest period subtracted from 20 hours, it is determined whether or not the ferry rest period subtracted from 20 hours is less than one half of the period from getting off the board to returning to the garage.

When the ferry rest period subtracted from 20 hours is less than one half of the period from getting off the board to returning to the garage, it is determined that the rest period does not comply with the Labor Standards Ordinance while "Rest Period Warning 7" is presented on the presentation device 7, when the ferry rest period subtracted from 20 hours is not less than one half of the period from getting off the board to returning to the garage, it is determined that the rest period complies with the Labor Standards Ordinance, and determinations relating to the rest period is finished.

### Determination Flow Regarding Rest Period of 2 Drivers

As shown in FIG. 9, at first, the Labor Standards Ordinance compliance determination device 9 determines whether or not the driver has boarded a ferry. In the case where the driver has not boarded a ferry, it is determined whether the rest period is equal to or more than continuous 4 hours. In the case where the rest period is equal to or more than continuous 4 hours, it is determined that the rest period complies with the Labor Standards Ordinance, and in the case where the rest period is less than continuous 4 hours, it is determined that the rest period does not comply with the Labor Standards Ordinance while "Rest Period Warning 8" is presented on the presentation device 7, and determination of rest period is finished. In the case where the driver has boarded a ferry, the Labor Standards Ordinance compliance determination device 9 determines whether the rest period of the driver is equal to or more than the period of the ferry rest period subtracted from 4 hours.

In the case where the rest period is less than the period of the ferry rest period subtracted from 4 hours, it is determined that the rest period does not comply with the Labor Standards Ordinance while "Rest Period Warning 9" is presented on the presentation device 7. On the other hand, in the case where the rest period is equal to or more than the period of the ferry rest period subtracted from 20 hours, it is determined that the rest period complies with the Labor Standards Ordinance and determination of rest period is finished.

### Determination Flow of Holiday Acquisition

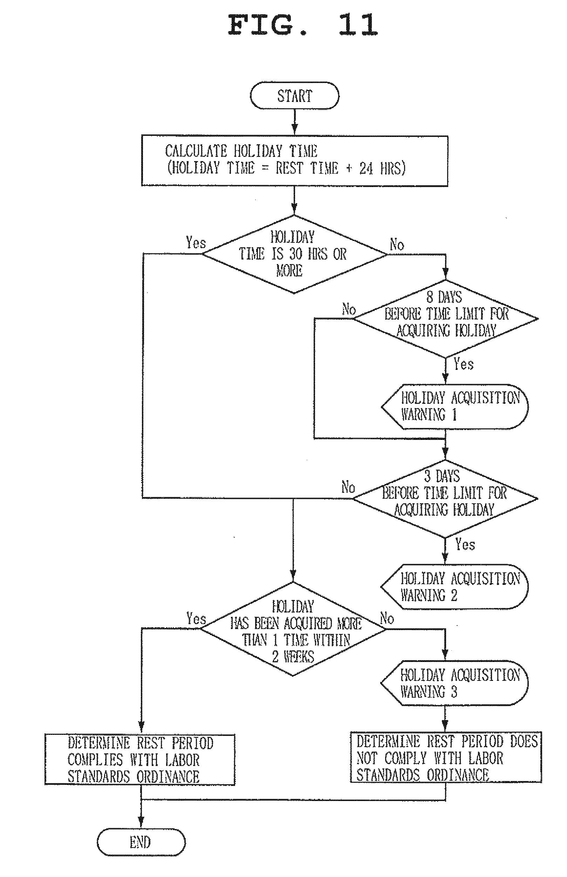

As shown in FIG. 11, the Labor Standards Ordinance compliance determination device 9 determines whether holiday time is 30 hours or more. In the case where the calculated period is 30 hours or more, it is determined that a holiday has been acquired. In the case where the calculated period is not 30 hours or more, it is determined that a holiday has not been acquired. Next, the Labor Standards Ordinance compliance determination device 9 determines whether the driver has acquired a holiday once for 2 weeks.

In the case where the driver has acquired a holiday once for 2 weeks, it is determined that such holiday acquisition complies with the Labor Standards Ordinance, in the case where a holiday has not been acquired for 2 weeks, the Labor Standards Ordinance compliance determination device 9 presents "Holiday Acquisition Warning 3" on the presentation device 7 and determines that such holiday acquisition does not comply with the Labor Standards Ordinance.

Note that, in the case when the determination day is 6^{th} day from the last holiday, the Labor Standards Ordinance compliance determination device 9 presents "Holiday Acquisition Warning 1" on the presentation device 7 and urges the driver to acquire a holiday. Further, in the case when the determination day is 11th day from the last holiday, the Labor Standards Ordinance compliance determination device 9 presents "Holiday Acquisition Warning 2" on the presentation device 7 and urges the driver to acquire a holiday.

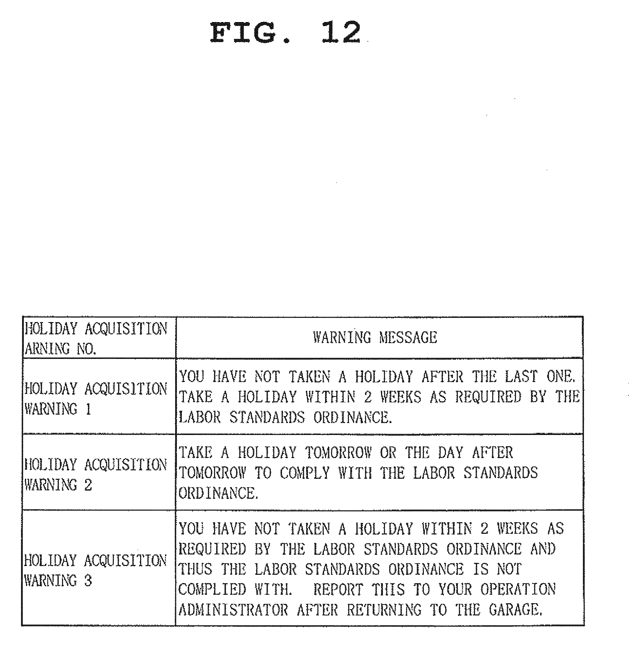

As shown in FIG. 12, for example, the following warning message is presented: "YOU HAVE NOT TAKEN A HOLIDAY WITHIN 2 WEEKS AS REQUIRED BY THE LABOR STANDARDS ORDINANCE AND THUS THE LABOR STANDARDS ORDINANCE IS NOT COMPLIED WITH. REPORT THIS TO YOUR OPERATION ADMINISTRATOR AFTER RETURNING TO THE GARAGE."

### Determination Flow Regarding On-Duty Time

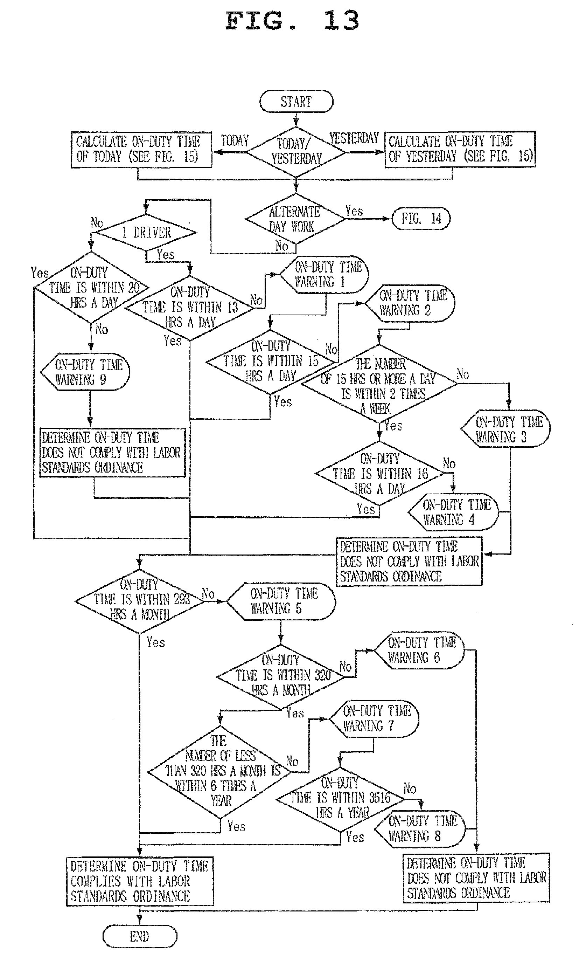

As shown in FIG. 13, the Labor Standards Ordinance compliance determination device 9 determines about yesterday's on-duty time and today's on-duty time, The yesterday's on-duty time refers to on-duty time of 24 hours from the last time of leaving the garage, and the today's on-duty time refers to on-duty time from the time when the leaving the garage button 24 is pressed today.

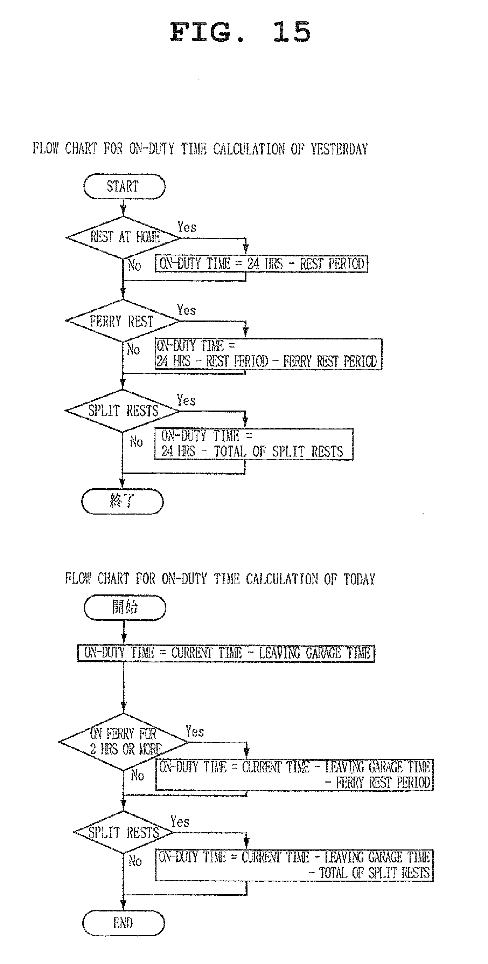

However, these may change according to work states, as shown in FIG. 15. Accordingly, the work state monitoring control device 44 makes the work state calculation device 8 calculate this and receives the calculated data, and sends that to the Labor Standards Ordinance compliance determination device 9 and makes it perform determinations. At first, the Labor Standards Ordinance compliance determination device 9 determines whether the driver is working on alternate days and/or driving by himself (1 driver).

Note that determination of on-duty time in the case of alternate day work will be explained later. Next, the on-duty time per day is determined. In the case where the number of drivers is 1 and the on-duty time per 1 day is less than 13 hours, no warning is presented and the process proceeds to determination per month. In the case where the on-duty time per day is 13 hours or more, "On-duty Time Warning 1" is presented on the presentation device 7, and it is determined whether the on-duty time of the driver per day is less than 15 hours.

As a result, in the case where the on-duty time per 1 day is less than 15 hours, no warning is presented and the process proceeds to determination per month, and in the case where the on-duty time per 1 day is 15 hours or more, "On-duty Time Warning 2" is presented on the presentation device 7, and it is determined how many times the day wherein on-duty time are 15 hours or more is within 1 week.

As a result, in the case where the day wherein on-duty time are 15 hours or more is more than 2 times per week, "On-Duty Time Warning 3" is presented on the presentation device 7, and it is determined that the on-duty time does not comply with the Labor Standards Ordinance. In the case where the day wherein on-duty time are 15 hours or more is within 2 times per week, it is determined whether the on-duty time is 16 hours or more.

In the case where the on-duty time is less than 16 hours, the process proceeds to determination per month, while in the case where the on-duty time are 16 hours or more, "On-Duty Time Warning 4" is presented on the presentation device 7, and it is determined that the on-duty time does not comply with the Labor Standards Ordinance.

In the case where the number of drivers is 1 and the on-duty time per 1 day is less than 20 hours, no warning is presented and the process proceeds to determination per month. In the case where the on-duty time per day is 20 hours or more, "On-duty Time Warning 9" is presented on the presentation device 7, and it is determined that the on-duty time complies with the Labor Standards Ordinance.

Next, the Labor Standards Ordinance compliance determination device 9 determines about the on-duty time per month. In the case where the on-duty time per month is less than 293 hours, the process proceeds to determination per year. In the cases where the on-duty time per month are 293 hours or more, "On-Duty Time Warning 5" is presented on the presentation device 7, and it is determined whether the on-duty time for 1 month is less than 320 hours.

As a result, when the on-duty time for 1 month are 320 hours or more, "On-Duty Time Warning 6" is presented on the presentation device 7, and it is determined that the on-duty time does not comply with the Labor Standards Ordinance. In the case where the on-duty time for 1 month is less than 320 hours, it is determined whether the number of months wherein on-duty time for 1 month is 293 hours or more and less than 320 hours is less than 6 times per year.

As a result, in the case where the number of months wherein on-duty time for 1 month are 293 hours or more and less than 320 hours is less than 6 times per year, it is determined that the on-duty time complies with the Labor Standards Ordinance. In the case where the number of months wherein on-duty time for one month is 293 hours or more and less than 320 hours is 6 times or more per year, "On-Duty Time Warning 7" is presented on the presentation device 7, and the process proceeds to determination per year.

Next, the Labor Standards Ordinance compliance determination device 9 determines about the on-duty time per year. In the case where the on-duty time for 1 year is less than 3,516 hours, it is determined that the on-duty time complies with the Labor Standards Ordinance, and in case where the on-duty time for 1 year is 3,516 hours or more, "On-Duty Time Warning 8" is presented on the presentation device 7, and it is determined that the on-duty time does not comply with the Labor Standards Ordinance, and determination of on-duty time is finished.

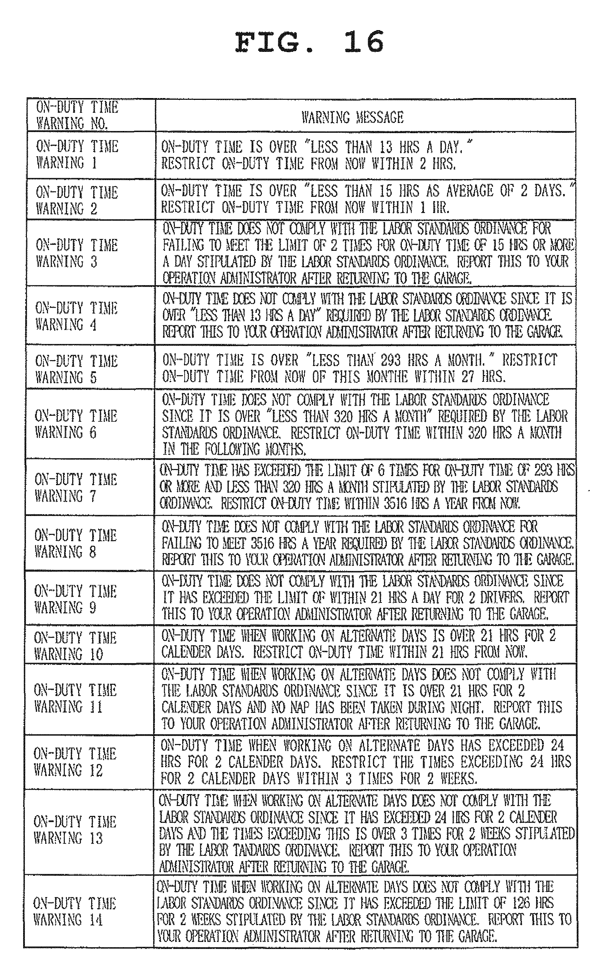

As shown in FIG. 16, for example, the following warning message is presented: "ON-DUTY TIME IS OVER "LESS THAN 13 HRS A DAY." RESTRICT ON-DUTY TIME FROM NOW WITHIN 2 HRS." When the driver inputs information of returning to the garage with work information input device 6 at the time of returning to the garage, the time of returning to the garage is recorded based on the internal clock 18.

### Determination Flow Regarding On-Duty Time of Alternate Day Work

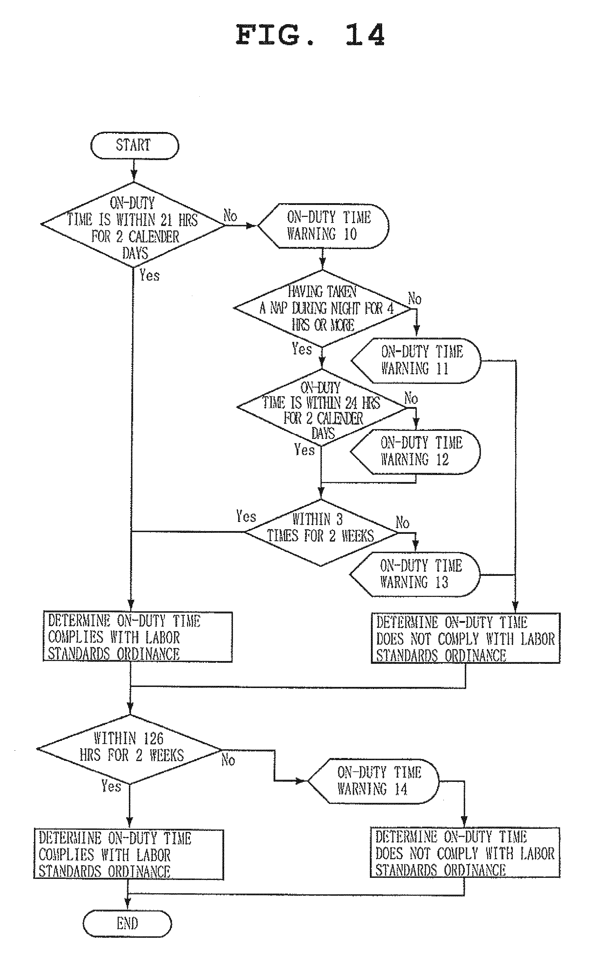

As shown in FIG. 14, at first, the Labor Standards Ordinance compliance determination device 9 determines whether the on-duty time of the driver is within 21 hours per 2 calendar days. In the case where the on-duty time is within 21 hours per 2 calendar days, it is determined that the on-duty time complies with the Labor Standards Ordinance, and the process proceeds to determination per 2 weeks. In the case where the on-duty time is not within 21 hours per 2 calendar days, "On-Duty Time Warning 10" is presented on the presentation device 7, and it is determined whether a nap for 4 hours or more has been acquired at night.

In the case where a nap for 4 hours or more has not been acquired at night, "On-Duty Time Warning 11" is presented and it is determined that the on-duty time does not comply with the Labor Standards Ordinance. In the case where a nap for 4 hours or more has been acquired at night, it is determined whether the on-duty time is within 24 hours per 2 calendar days.

In the case where the on-duty time is not within 24 hours per 2 calendar days, "On-Duty Time Warning 12" is presented, and it is determined whether the number of times of that is within 3 times per 2 weeks. In the case where the on-duty time are within 24 hours per 2 calendar days, "On-Duty Time Warning 12" is not presented, and it is determined whether the number of times of that is within 3 times per 2 weeks.

In the case where it is within 3 times per 2 weeks, it is determined that the on-duty time complies with the Labor Standards Ordinance and the process proceeds to determination per week, in the case where it is not within 3 times per 2 weeks, "On-Duty Time Warning 13" is presented, and it is determined that the on-duty time complies with the Labor Standards Ordinance. Next, the Labor Standards Ordinance compliance determination device 9 determines about the on-duty time per 2 weeks.

In the case where the on-duty time of the driver is 126 hours or less per 2 weeks, it is determined that the on-duty time complies with the Labor Standards Ordinance, and in the case where the on-duty time of the driver is not 126 hours or less per 2 weeks, "On-Duty Time Warning 14" is presented, it is determined that the on-duty time does not comply with the Labor Standards Ordinance, and determination regarding on-duty time of alternate day work is finished.

### Determination Flow of Driving Time and Break Time

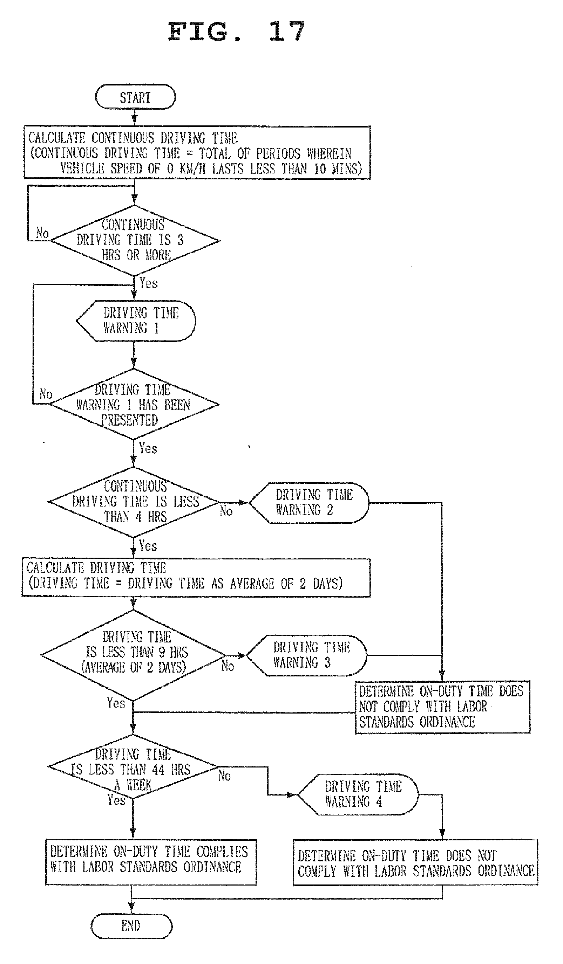

As shown in FIG. 17, the Labor Standards Ordinance compliance determination device 9 determines that a period of the state with the vehicle speed of more than 0 km/h and a period of the state with the vehicle speed of 0 km/h that lasts for less than 10 minutes are continuous driving time and records it. The Labor Standards Ordinance compliance determination device 9 presents "Driving Time Warning 1 on the presentation device 7 at the time when the continuous driving time reaches 3 hours. After "Driving Time Warning 1" is presented, the Labor Standards Ordinance compliance determination device 9 determines whether the continuous driving time is less than 4 hours.

In the case where the continuous driving time is 4 hours or more, the Labor Standards Ordinance compliance determination device 9 presents "Driving Time Warning 2" on the presentation device 7, and it is determined that the driving time does not comply with the Labor Standards Ordinance. In the case where the continuous driving time is less than 4 hours, it is determined whether the average driving time for 2 days is less than 9 hours.

In the case where the average driving time for 2 days is less than 9 hours, it is determined that the driving time complies with the Labor Standards Ordinance. In the case where the average driving time for 2 days is 9 hours or more, the Labor Standards Ordinance compliance determination device 9 presents "Driving Time Warning 3" on the presentation device 7, and it is determined whether the total driving time for 1 week is less than 44 hours.

In the case where the total driving time for 1 week is less than 44 hours, it is determined that the driving time complies with the Labor Standards Ordinance, and in the case where the total driving time for 1 week is 44 hours or more, "Driving Time Warning 4" is presented on the presentation device 7, and it is determined that the driving time does not comply with the Labor Standards Ordinance, and determinations of the driving time and the break time are finished. These determinations are performed successively.

In the case where the speed of the car is in a state of 0 km/h continuously for 10 minutes or more, the Labor Standards Ordinance compliance determination device 9 determines that the state is the break time, and records the period for the state of 0 km/h on the storage device 10.

The continuous driving time is reset and turns 0 hour, for example, in the cases of: the break time is continuously 10 minutes or more and is 30 minutes or more as a total for one time; the driver inputs a start/finish of a break with the work information input device 6; or the driver inputs a start/finish of boarding ferry with the work information input device 6.

However, even if it is a case where the start/finish of break has been input, the continuous driving time would not reset when the continuation period for the break of the internal clock 18 is not "10 minutes or more and 30 minutes or more as a total."

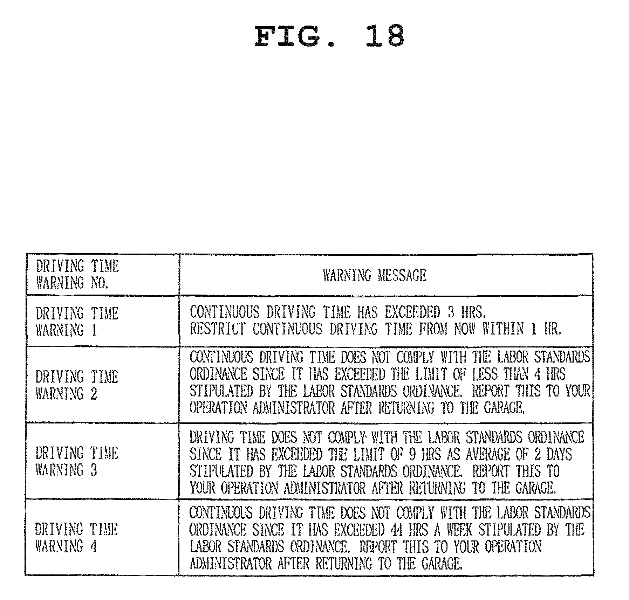

As shown in FIG. 18, for example, the following warning message is presented: "CONTINUOUS DRIVING TIME DOES NOT COMPLY WITH THE LABOR STANDARDS ORDINANCE SINCE IT HAS EXCEEDED THE LIMIT OF LESS THAN 4 HRS STIPULATED BY THE LABOR STANDARDS ORDINANCE. REPORT THIS TO YOUR OPERATION ADMINISTRATOR AFTER RETURNING TO THE GARAGE."

As shown in FIG. 4, the above-mentioned work information input device 6 comprises, for example, a normally work button 20, an alternate day work button 21, a one driver button 22, a 2 drivers button 23, a leaving the garage button 24, a returning to the garage button 25, a split rest start button 26, a split rest finish button 27, a break start button 28, a break finish button 29, a nap start button 30, a nap finish button 31, a ferry boarding start button 32, a ferry boarding finish button 33, a standby start button 34, a standby finish button 35, a loading start button 36, a loading finish button 37, an unloading start button 38, an unloading finish button 39, a car-washing/inaintenance/oil-supply start button 40, a car-washing/maintenance/oil-supply finish button 41, an overtime working button 42, a holiday work button 43, and a compliance status confirmation button 45.

A device for the driver to input his work states provided by the Labor Standards Ordinance of FIG. 35 is the work information input device 6. There are 29 input items as mentioned above, and these cover all work states of the driver that the Labor Standards Ordinance of FIG. 35 provides.

The work state monitoring and controlling device 44 can, based on the input information, detect automatically a state, such as rest, day off, on-duty, and driving provided in FIG. 35 and obtain, based on the time data calculated from the work state calculation device 8, rest period, holiday time, on-duty time, and driving time, and can make the Labor Standards Ordinance compliance determination device 9 perform determinations whether they comply with the time or period specified by the Labor Standards Ordinance.

When one of these buttons is pressed with the work information input device 6, the time is output from the internal clock 18 built in the digital tachograph body 5 and is recorded on the storage device 10. The time of the internal clock 18 is amended by the GPS Satellite clock as needed.

When one of these buttons is pressed and a condition for changing state is fulfilled, the state of the driver changes as shown in FIG. 5, a current state is notified to the work state calculation device 8 by the work state monitoring and controlling device 44, and work state data in that state is calculated by the work state calculation device 8. For example, in the case where the ferry boarding start button 32 is pressed the state of the driver transfers to "Boarding on Ferry", and the work state calculation device 8 calculates a period until 2 hours pass since the time when the ferry boarding start button 32 was pressed as the on-duty time.

The state will transfer to "Rest at Ferry" when 2 hours have lapsed, and the work state calculation device 8 calculates the period until the ferry boarding finish button 33 is pressed as a split rest period. Then, the state will transfer to "On-Duty" when the ferry boarding finish button 33 is pressed,

Even if the driver operates the work information input device 6, the state does not change in the case where the conditions are not fulfilled. The state monitoring and controlling device 44 carries out supervisor control of this. For example, when the split rest start/finish buttons 26 and 27 and the nap start/finish buttons 30 and 31 are pressed, the state firstly will shift to "Break" and a period for that is calculated as the break time, and in the case where the break time reaches 4 hours the state will transfer to "Split Rest" and the period is calculated as the split rest period.

The above-mentioned work information input device 6 may be provided with a simulation function. An example of the simulation function is such function which calculates and determines how a future schedule would change if a split rest is acquired currently by the work state calculation device 8 and the Labor Standards Ordinance compliance determination device 9 and presents the result for the driver when the split rest start button 26 is pressed in the state where the simulation function is ON.

The object of the simulation function is not limited to the case of split rest. It may be other cases, such as a case of returning to the garage, a case where a rest period is acquired, a case where a break is acquired, a case where driving is continued under the situation where a split rest is scheduled to be acquired, and a case where a following time of leaving the garage is changed.

By providing such a function, the driver can perform simulations according to the Labor Standards Ordinance easily. Therefore, even if the driver changes the details of a schedule according to driving situation, the driver can carry out his driving schedule in accordance with the Labor Standards Ordinance.

When the driver loads the digital tachograph body 5 of the digital tachograph 1 constructed as above with the storage device 10, the work state calculation device 8 acquires a driver's driving history, calculates on-duty time or the like, and outputs to the work state monitoring and controlling device 44. When driving the work state calculation device 8 is operated and logs data of driving records and digitally records them in the storage device 10, and based on the operation of work state calculation device 8 and the data of storage device 10 the Labor Standards Ordinance compliance determination device 9 is operated and determines labor conditions. The results of the determinations are recorded on the recorder 10, and in the case where the driver's labor conditions do not satisfy the labor conditions provided in the Labor Standards Ordinance, a warning is presented on the presentation device 7.

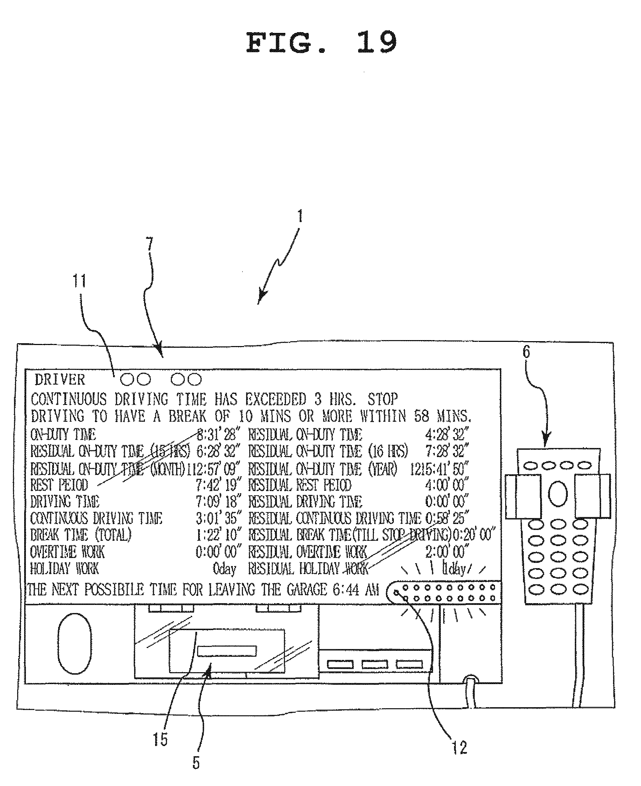

As shown in FIG. 19,on the above-mentioned presentation device 7 at least one of the following items regarding determination results calculated by the Labor Standards Ordinance compliance determination device 9 is automatically presented as a warning before breaching the Labor Standards Ordinance: On-duty time, Residual on-duty time, Rest period, Residual rest period, Driving time, Residual driving-time, Continuous driving time, Residual continuous driving time, Break time, Residual break time, Total break time, Residual break time necessary for cessation of driving, Overtime working time, Residual overtime working time, Holiday working, and Residual Holiday working. According to this embodiment, a monitor 11 on which all items are displayed and a sound presentation device 12 notifying in electronic sound or vocal sound are provided.

As a warning that is notified before breaking the Labor Standards Ordinance, it may be "On-duty Time Warning 1," or "Driving Time Warning 1," etc., at the time of reaching any preset time. These items may be presented for every definite period of time. Further, the monitor and the sound presentation device of the above-mentioned presentation device 7 can present a current compliance status in real time by operation of compliance status confirmation button 45 of the driver's work state input device 6.

That is, at least one of the following items can be presented in real time: On-duty time, Residual on-duty time, Rest period, Residual rest period, Driving time, Residual driving time, Continuous driving time, Residual continuous driving time, Break time, Residual break time, Total break time, Residual break time necessary for cessation of driving, Overtime working time, Residual overtime working, time, Holiday working, and Residual Holiday working. Therefore, the driver can easily know, for example, how much time he has currently been driving continuously and how much more time he can drive continuously, how much time he needs to take as a rest period, and how much time remains as the on-duty time.

Here, what is presented as the residual on-duty time is how much more time is left before reaching 13 hours, how much more time is left before reaching 15 hours, or how much more time is left before reaching 16 hours or the like, which are on-duty time per day.

As the residual rest period, how much more time the driver needs to take, etc., is presented. Note that as to the case of split rest, in the case where driving is resumed in less than 4 hours after driving has been stopped in order to take a rest, the residual rest period is presented as 4 hours since a split rest must be taken as continuous 4 hours or more (exception to the rest period).

What is presented as the residual driving time is how much more time is left before reaching 9 hours as average of 2 days, or how much more time is left before 44 hours as average of 1 week or the like, which are maximums of the driving time a day. What is presented as the residual continuous driving time is how much time is left before reaching 4 hours which are the maximum of a continuous driving time. What is presented as the residual break time is how many more minutes are necessary before reaching 10 minutes which are calculated as 1 break.

What is presented as the residual break time is how many more minutes are necessary to take a break time of 30 minutes which resets the continuous driving time. What is presented as the residual overtime working time is how much more time is left before reaching 2 hours which are the maximum of the overtime working time a day, or how much more time is left before reaching the maximum of the overtime working time a month or a year etc. What is presented as the residual holiday working is how many more times are available for the holiday working. By these items being presented, the driver can understand his work state easily and can promote the Labor Standards Ordinance compliance.

As to the on-duty time, the rest period, the driving time, the continuous driving time, the break time, the total break time, the overtime working time, and residual periods for these, the current information is presented in real time. As shown in FIG. 19 as a method for presenting the on-duty time, the rest period, the driving time, the continuous driving time, the break time, the total break time, and the overtime working time, a count-up method is applied to present.

Regarding the residual period, presenting the residual by a countdown method from a prescribed period is applicable. The residual period may be presented as a specific time such as a next possible time of leaving the garage shown in FIG. 19. Further, the following messages may be presented: "Return to the garage by X hours Y minutes"; "Take a rest period by X hours Y minutes"; "Time limit of the on-duty time is until X hours Y minutes"; "Take a break Z minutes or more by X hours Y minutes, and stop driving"; or "Continuation driving is possible until X hours Y minutes."

Further, an explanation regarding the above-mentioned time may be presented, such as, for example, an explanation that it is the time which reaches the limit of the on-duty time, an explanation that it is the time which reaches the limit of the continuous driving time, or an explanation that it is the time when the continuous driving time is reset.

Specifically, for example, the following explanation can be presented: "The continuous driving time has exceeded 3 hours. Take a break for continuous 10 minutes or more within 58 minutes (by 10:18), and stop driving. It will reach 4 hours which are a maximum of a continuous driving time at 10:18. The continuous driving time will be reset by acquiring a period of break time with a continuous 10 minutes or more per time and a total of 30 minutes or more,"

In this case, that content of warning may be continuously presented until it is dissolved, the presentation of the residual period (58 minutes in the above-mentioned example) may decrease in real time, or the content of warning may be presented for every predetermined time (for example, every 30 minutes) until it is dissolved.

These presentations may be combined with each other, and other warnings and/or presentations which do not breach the criterion specified by the Labor Standards Ordinance may be used. By presenting of working hours, the residual period, time, and explanation of time, etc., in this way, the driver can comply with the Labor Standards Ordinance even in the case where he does not have the knowledge of the Labor Standards Ordinance.

In cases where a button is pressed which makes transition of a state of the driver, such as the break start button 28, or in cases where the state of 0 km/h continues 10 minutes or more even if the break start button 28 etc. is not pressed, since a state shifts and the break time or the rest period is presented, the driver can take a break or rest certainly.

Since the next time of leaving the garage is also presented, the driver can know easily from what time he can start in the case when he returns to the garage now. In the case where the compliance status confirmation button 45 is pressed, the current status of the driver, such as the next time of leaving the garage, and driver information may be presented on the presentation device. It may be configured so as to make the driver choose the information to be presented.

The storage device 10 is connected to the storage device connecting section 15 of the digital tachograph body 5 and records these determination results and legal 3 elements (period, speed, distance) successively. The storage device 10 will be removed after returning to the garage, and the operation administrator will check in office whether the labor conditions of the driver of vehicle 2 of the carrier comply with Labor Standards Ordinance. The operation administrator will prepare next driving written instructions planned to be compliant with the Labor Standards Ordinance and will give the instructions to the driver in the case where the labor conditions did not comply with the Labor Standards Ordinance.

The digital tachograph 1 as configured in this way will present information on the presentation device 7 automatically, such as the on-duty time, acquisition of the rest period, and/or the limit of a driving time, etc., which will fulfill the conditions provided by the Labor Standards Ordinance when the driver mounts the storage device 10 on the digital tachograph body 5 and drives the vehicle.

For this reason, the driver can understand his driving schedule that is gradually changing by traffic congestion after leaving the garage, etc., with presentation device 7, and calculation of the conditions provided by the Labor Standards Ordinance becomes unnecessary. Therefore, a driving which complies with the Labor Standards Ordinance will be achieved without putting a burden on the driver.

The work state monitoring and controlling device 44 may be configured so as to prepare the work exceptional data of the split rest period or the ferry rest period, etc., and send the exceptional data to the Labor Standards Ordinance compliance determination device 9 in addition to monitoring the state of the driver and sending the state of the driver to the work state calculation device 8 and/or the Labor Standards Ordinance compliance determination device 9.

Thus, when the work state monitoring and controlling device 44 is configured so that it can comprehensively manage numeric data of special exceptions, etc., the design can be easily changed only by correcting the work state monitoring and controlling device even in the case where there is an increase or decrease in the control items or a change in the control values, etc., by a legal amendment or the like.

### Other embodiments for working the invention

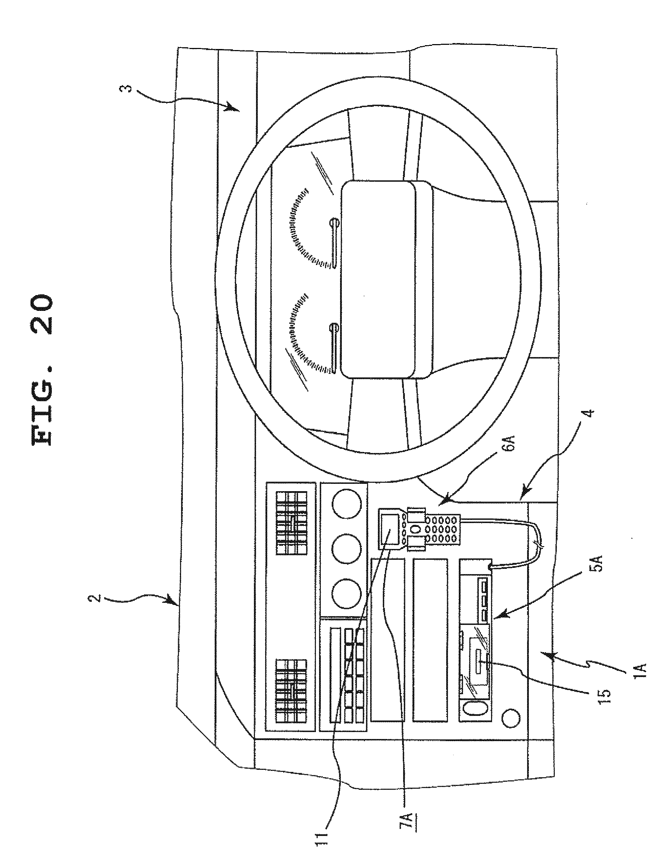

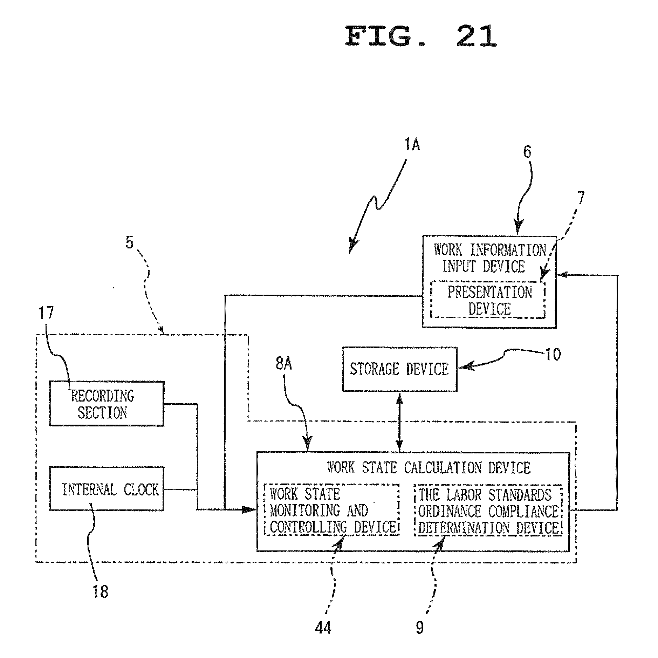

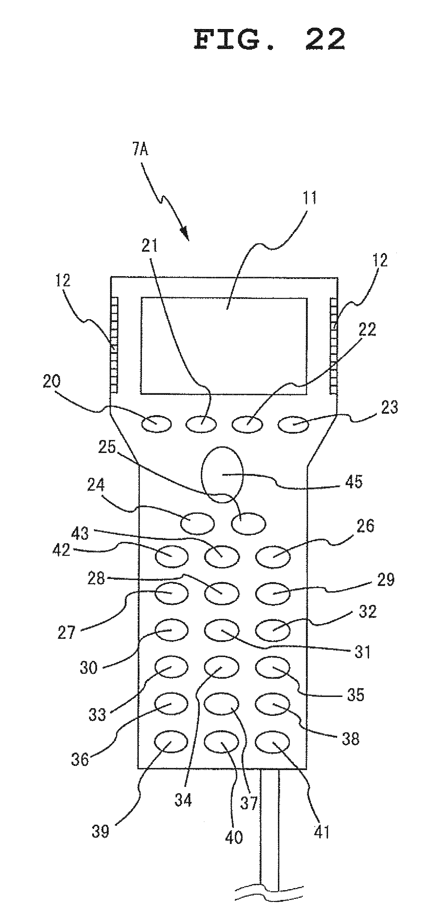

Next, other embodiments for working the present invention shown in FIGs. 20 to 34 will be explained. In explaining other embodiments for working the present invention, like numerals refer to like elements as the above-mentioned first embodiment for working the present invention, and redundant explanations will be omitted.

In a second embodiment for working the present invention shown in FIGS. 20 to 22, aspects that are mainly different from the above-mentioned first embodiment for working the present invention are that a monitor 11 of the presentation device 7A is provided with the work information input device 6A, the work state monitoring and controlling device 44 and the Labor Standards Ordinance compliance determination device 9 are built in the work state calculation device 8A, and the digital tachograph 5A is provided with such work information input device 6A and work state calculation device 8A.

The same operation and effect as with the above-mentioned first embodiment for working the present invention are also obtained by the digital tachograph 1A configured in this way.

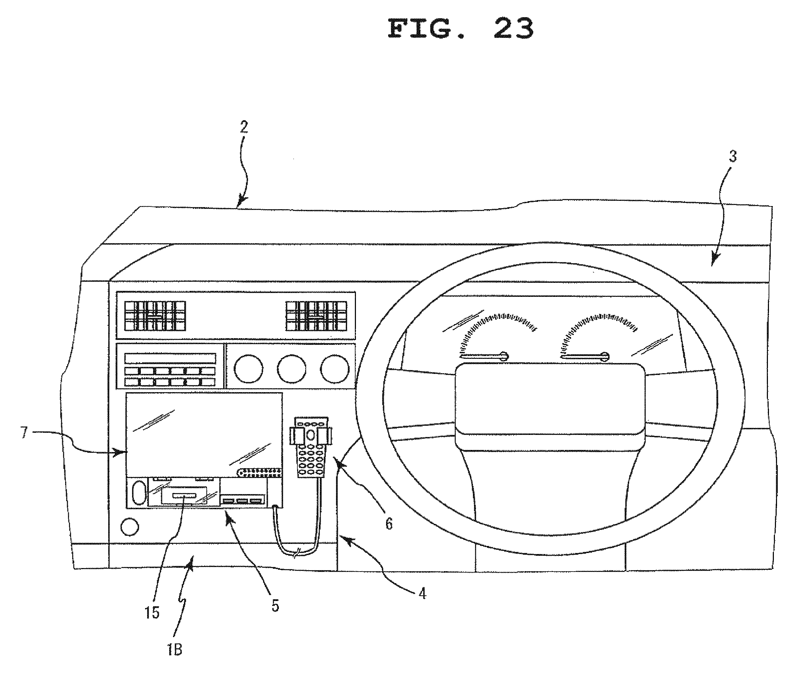

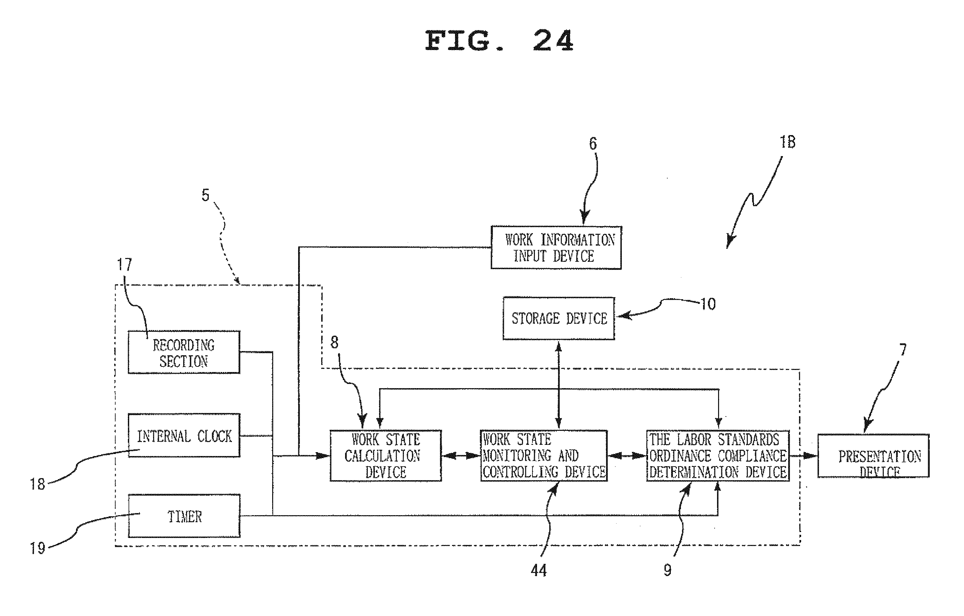

In a third embodiment for working the present invention shown in FIGs. 23 and 24, a mainly different aspect from the above-mentioned first embodiment for working the present invention is that by making the work state calculation device 8 be in cooperation with a timer 19 and enabling the work state data to be sent to the Labor Standards Ordinance compliance determination device 9 for every predetermined time, for example in 5 to 15 minutes, calculation of the conditions for fulfilling the conditions provided by the Labor Standards Ordinance for the every predetermined time is made possible.

The same operation and effect as with the above-mentioned first embodiment for working the present invention are also obtained by the digital tachograph 1B configured in this way. In this embodiment, although the timer 19 and the internal clock 18 are separate, the internal clock 18 may be equipped with the function of the timer 19.

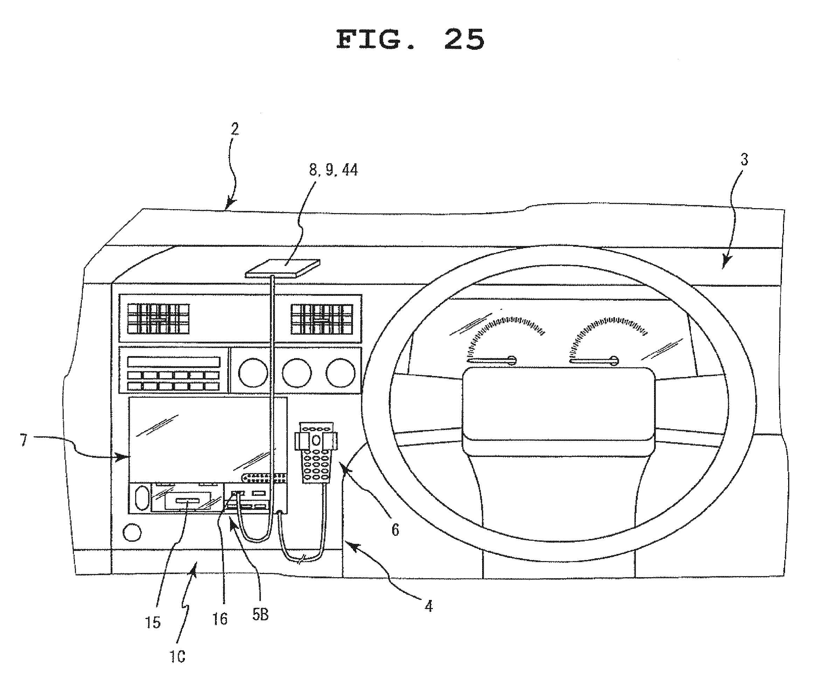

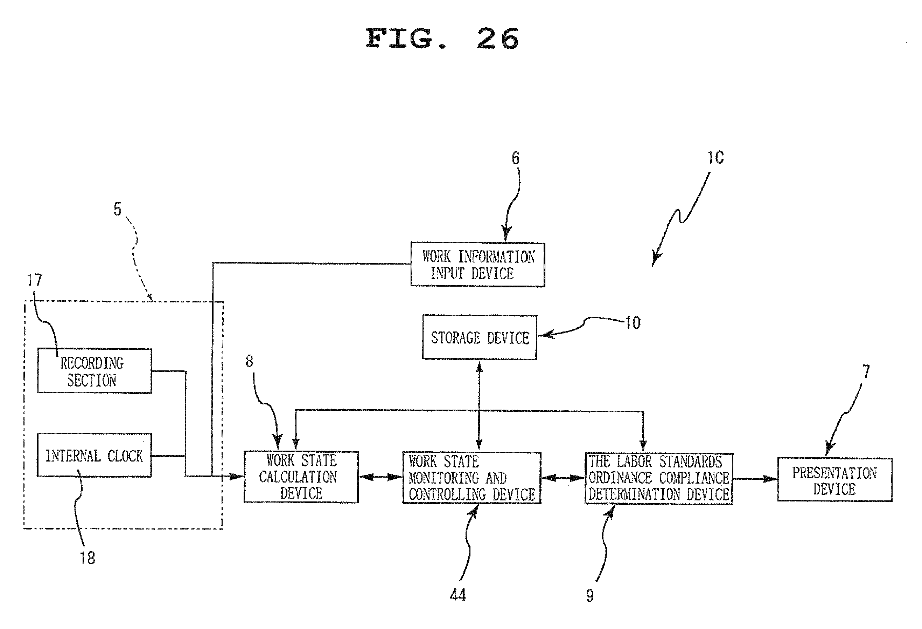

In a fourth embodiment for working the present invention shown in FIGs. 25 and 26, a mainly different aspect from the above-mentioned first embodiment for working the present invention is that a soft connecting section 16 is provided to a conventional digital tachograph body 5B, and the work state calculation device 8 and the Labor Standards Ordinance compliance determination device 9 are externally connected.

The same operation and effect as the above-mentioned first embodiment for working the present invention are also obtained by the digital tachograph 1C configured in this way. Further, it is made possible for the driver to perform driving which fulfills the conditions provided by the Labor Standards Ordinance using a digital tachograph used currently.

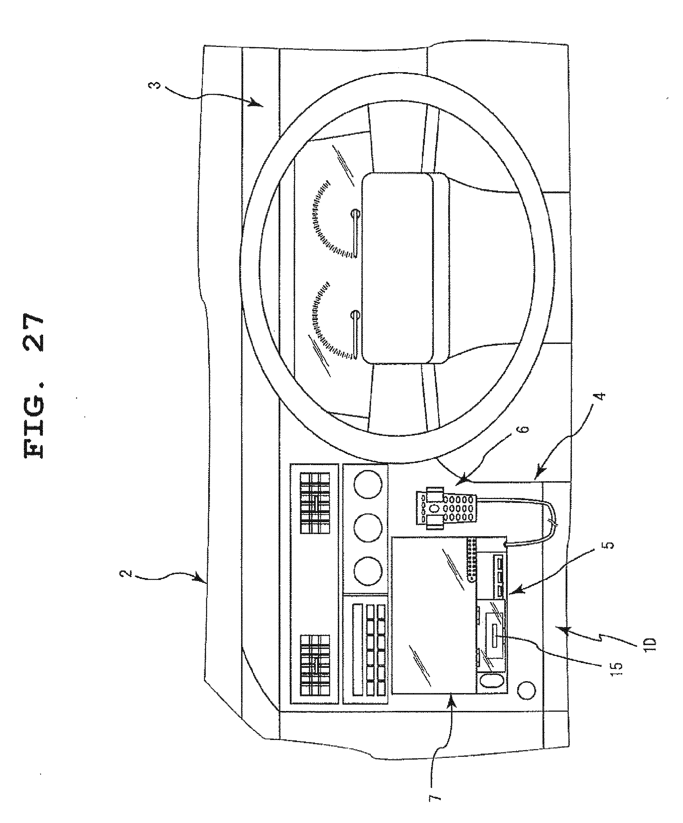

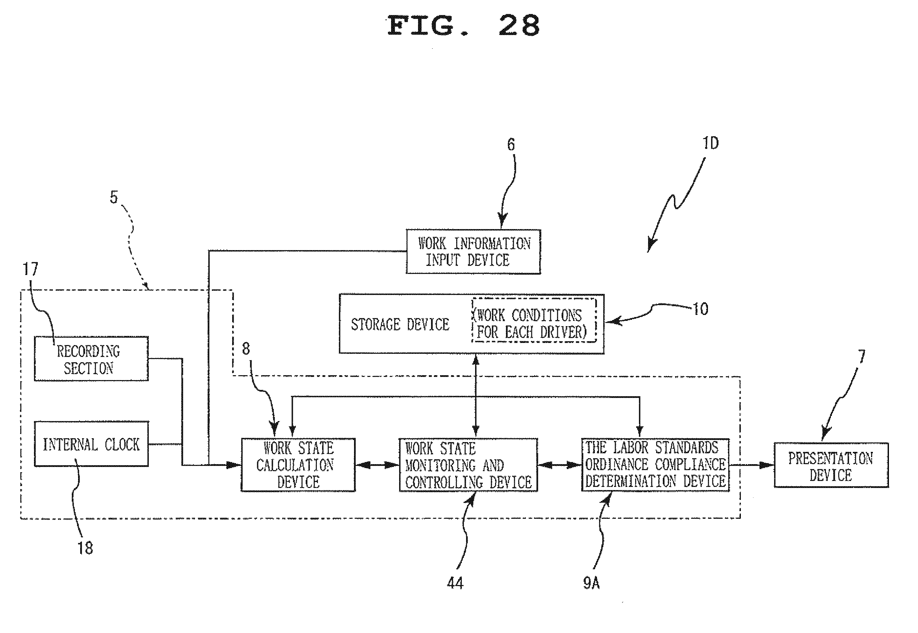

In a fifth embodiment for working the present invention shown in FIGs. 27 and 28, a mainly different aspect from the above-mentioned first embodiment for working the present invention is that the Labor Standards Ordinance compliance determination device 9A is configured so that a driving administrator can set up labor conditions for each driver within the limits provided by the Labor Standards Ordinance.

The same operation and effect as with the above-mentioned first embodiment for working the present invention are also obtained by the digital tachograph 1D configured in this way. Further, for example, for a driver with many accidents, individual driving control, such as setting up the maximum of a continuous driving time in 2 hours, can be carried out.

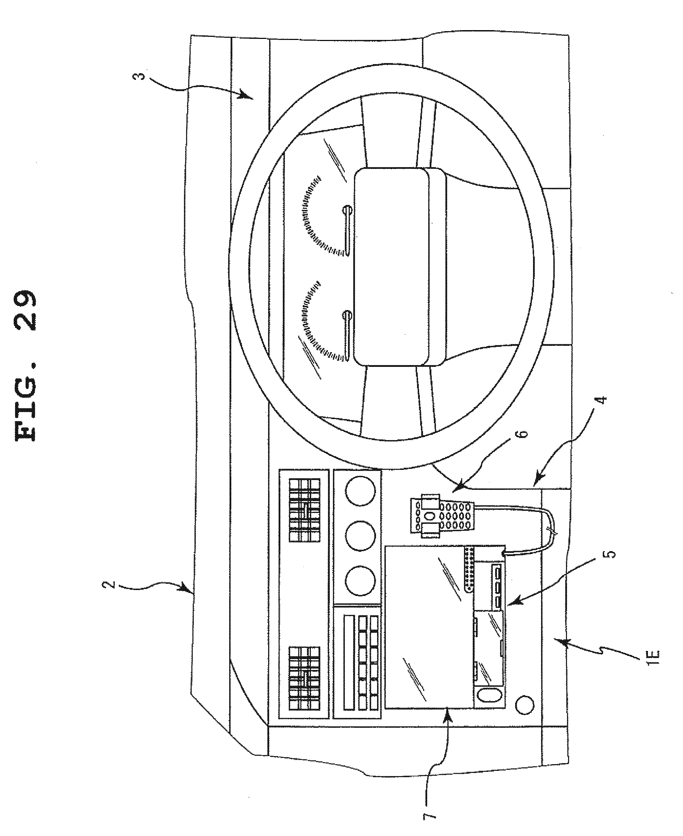

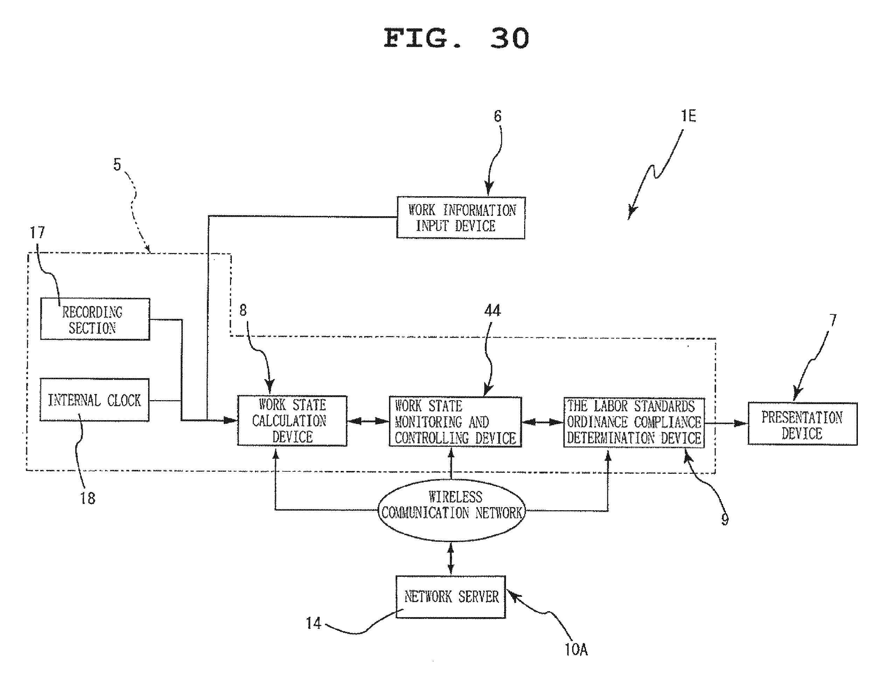

In a sixth embodiment for working the present invention shown in FIGs. 29 and 30, a mainly different aspect from the above-mentioned first embodiment for working the present invention is that a network server 14 as the storage device 10A is provided via a wireless communications network 13. The same operation and effect as the above-mentioned first embodiment for working the present invention are also obtained by the digital tachograph 1E configured in this way.

Note that when a driver's information is transmitted to the storage device 10A using the work information input device 6, a driver's driving history will be transmitted to the Labor Standards Ordinance compliance determination device 9 from the storage device 10A.

This embodiment is explained using the work information input device 6 to input the driver's information. However, a driver may be identified by use of an ID card in which only driver information is recorded, or other means, such as a password, fingerprint authentication, biometrics, etc. may be used.

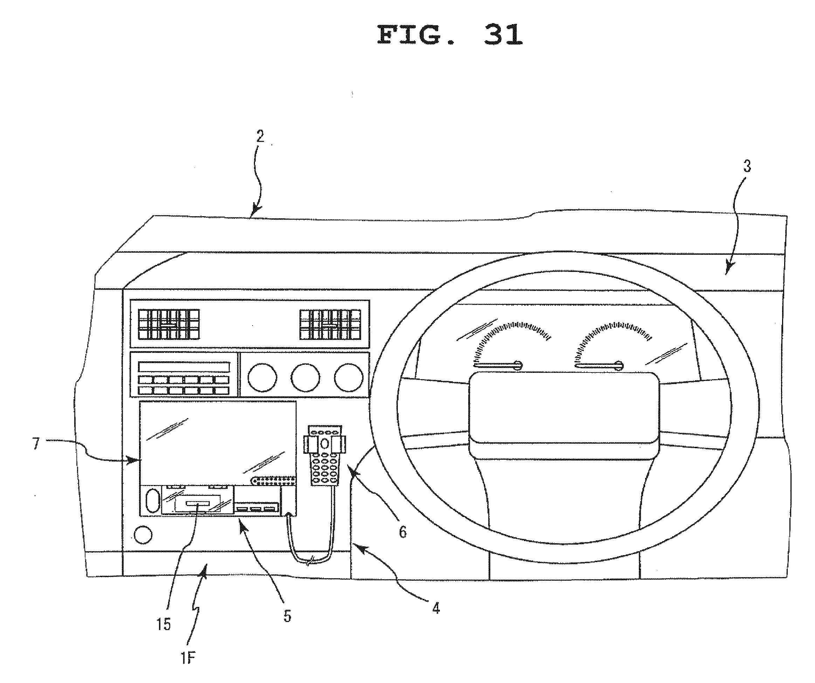

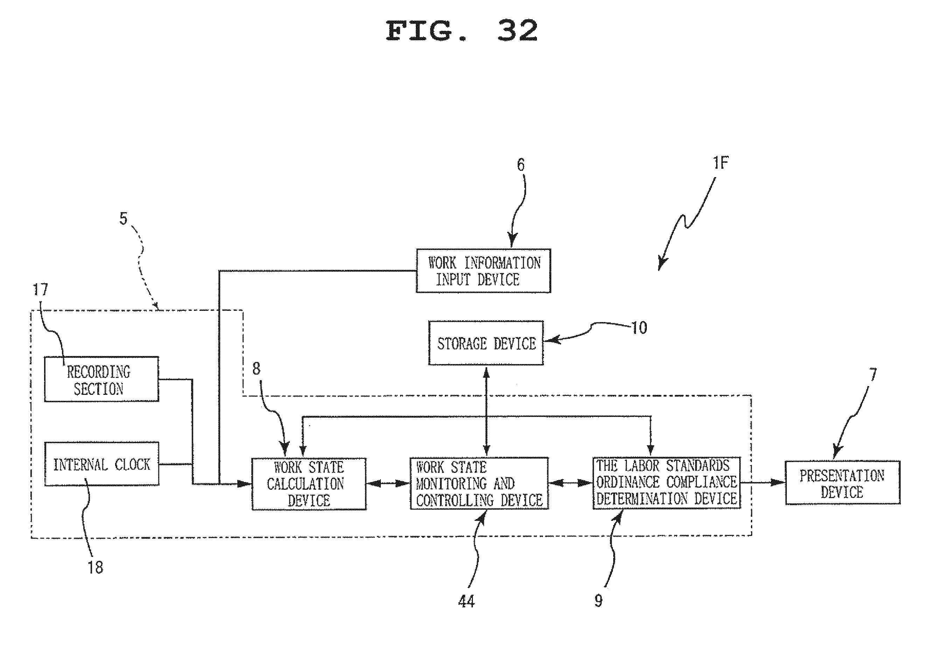

In a seventh embodiment for working the present invention shown in FIGs. 31 and 32, a mainly different aspect from the above-mentioned first embodiment for working the present invention is that the driver's state is sent from the work state calculation device 8 directly to the presentation device 7 and is presented. The same operation and effect as the above-mentioned first embodiment for working the present invention are also obtained by the digital tachograph 1E configured in this way. Further, since the driver's state can be presented without passing through the work state monitoring control device 44 or the Labor Standards Ordinance compliance determination device 9, the continuous driving time or the like can be presented without a time lag.

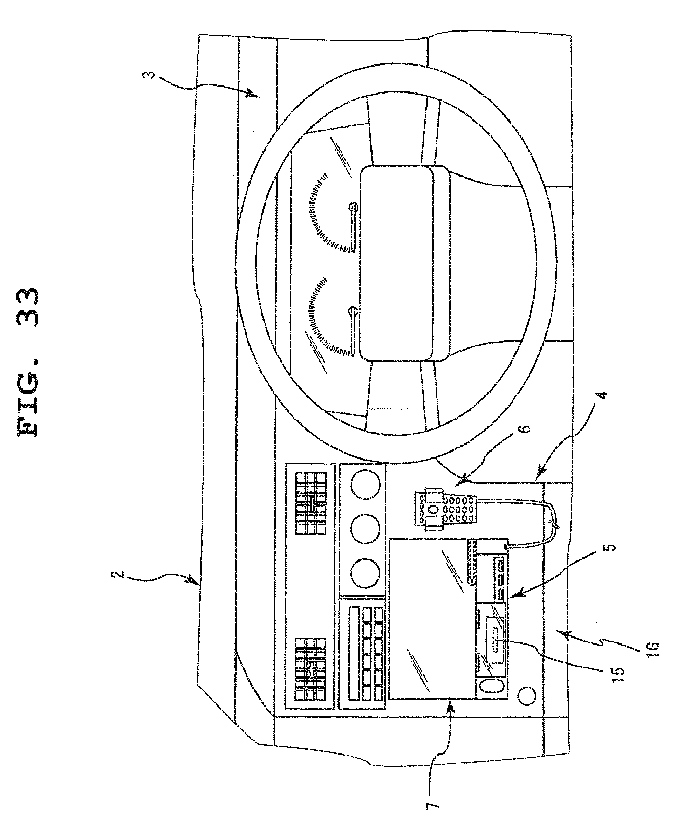

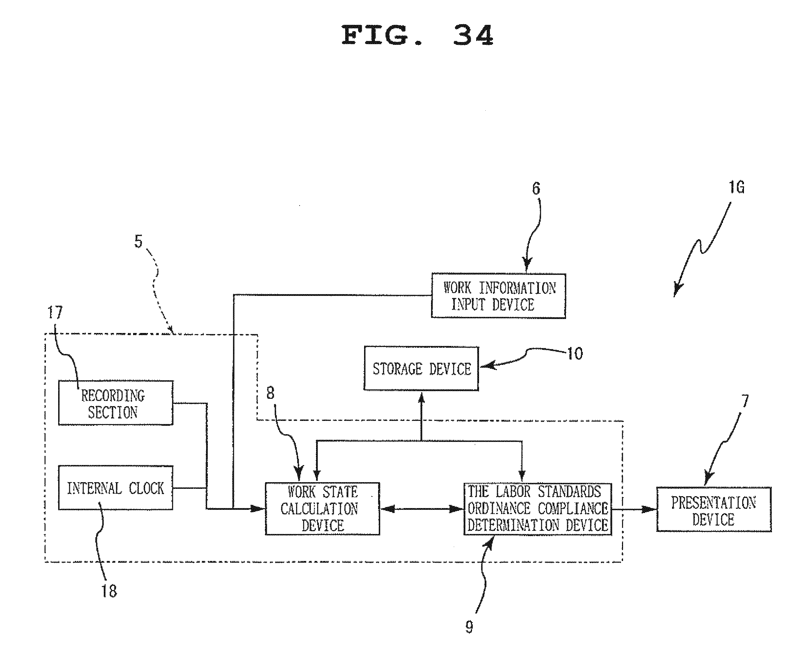

In an eighth embodiment for working the present invention shown in FIGs. 33 and 34, a mainly different aspect from the above-mentioned first embodiment for working the present invention is that calculation and determination of work states are carried out without using the work state monitoring and controlling device 44. Also in a digital tachograph 1G configured in this way, a driver's work state can be determined from simple calculation data, such as a total period, etc, Also in a digital tachograph wherein the state monitoring function of the work state monitoring and controlling device 44 is provided by either the work state calculation device 8 or the Labor Standards Ordinance compliance determination device 9, the same operation and effect as the above-mentioned first embodiment for working the present invention are also obtained.

The embodiments of the invention in this application are explained as comprising the monitor 11 and the sound presentation device 12 as the presentation device 7. However, the invention in this application is not limited to these embodiments, and the presentation device 7 may use only one of the monitor 11 and the sound presentation device 12.

Further, an explanation is made in the above that all of the On-duty time, Residual on-duty time, Rest period, Residual rest period, Driving time, Residual driving time, Continuous driving time, Residual continuous driving time, Break time, Residual break time, Total break time, and Residual break time necessary for cessation of driving are presented, all of these items may be presented selectively or one of these items may be presented.

Different items may be presented as items presented automatically. For example, the residual on-duty time and, when the driver presses the compliance status confirmation button 45, the residual continuous driving time may be presented automatically.

In the embodiments of the invention in this application, these items are presented by operating the compliance status confirmation button 45 of the work information input device 6. However, a remote control, an operation panel, etc., which present these items may be used independently from the work information input device 6.

According to the embodiments of the invention in this application, although explanations have been made based on the standards for the improvement of the working hours or the like of the automobile driver at the time of this application, in cases where the standards are revised the invention in this application can be worked by setting up labor conditions based on the new standards. The present invention can also be used not only for a track, but also for vehicles, such as a bus, a taxi, etc.

The present invention can be used in the field of the manufacture industry of digital tachographs installed in and used for buses, tracks, taxis, etc.

## Claims

1. A digital tachograph installed in a vehicle of a transportation company having a duty to install the tachograph, comprising:
- a digital tachograph body;
- a work state calculation device capable of calculating work state data connected to the digital tachograph body;
- a labor standard law compliance determination device connected to the work state calculation device for determining whether a labor condition of a driver of the vehicle of the transportation company fulfills a condition provided by a labor standard law based on the work state data calculated by the work state calculation device;
- a storage device for recording determination results determined by the labor standard law compliance determination device and/or the work state data of the work state calculation device; and
- a presentation device connected to the digital tachograph body capable of easily informing the driver of a determination result including residual on-duty time determined by the labor standard law compliance determination device.

2. A digital tachograph installed in a vehicle of a transportation company having a duty to install the tachograph, comprising:
- a digital tachograph body;
- a work state calculation device capable of calculating work state data connected to the digital tachograph body;
- a labor standard law compliance determination device connected to the work state calculation device for determining whether a labor condition of a driver of the vehicle of the transportation company fulfills a condition provided by a labor standard law based on the work state data calculated by the work state calculation device;
- a storage device for recording determination results determined by the labor standard law compliance determination device and/or the work state data of the work state calculation device; and
- a presentation device connected to the digital tachograph body capable of presenting automatically at least one determination result determined by the labor standard law compliance determination device before breaching the labor standard law, the at least one determination result relating to any one of items of on-duty time, residual on-duty time, rest period, residual rest period, driving time, residual driving time, continuous driving time, residual continuous driving time, break time, residual break time, total break time, residual break time necessary for cessation of driving, holiday acquisition, and time limit of holiday acquisition.

3. A digital tachograph installed in a vehicle of a transportation company having a duty to install the tachograph, comprising:
- a digital tachograph body;
- a work state calculation device capable of calculating work state data connected to the digital tachograph body;
- a labor standard law compliance determination device connected to the work state calculation device for determining whether a labor condition of a driver of the vehicle of the transportation company fulfills a conditions provided by a labor standard law based on the work state data calculated by the work state calculation device;
- a work state monitoring and controlling device connected to the work state calculation device for monitoring a state of a driver and notifying a current state of the driver to the labor standard law compliance determination device;
- a storage device for recording determination results determined by the labor standard law compliance determination device and/or the work state data of the work state calculation device; and
- a presentation device connected to the digital tachograph body capable of presenting automatically at least one determination result determined by the labor standard law compliance determination device before breaching the labor standard law, the at least one determination result relating to any one of items of on-duty time, residual on-duty time, rest period, residual rest period, driving time, residual driving time, continuous driving time, residual continuous driving time, break time, residual break time, total break time, residual break time necessary for cessation of driving, holiday acquisition, and time limit of holiday acquisition.

4. A digital tachograph installed in a vehicle of a transportation company having a duty to install the tachograph, comprising:
- a digital tachograph body;
- a work state calculation device capable of calculating work state data connected to the digital tachograph body;
- a work information input device for inputting a work state of a driver connected to the work state calculation device;
- a labor standard law compliance determination device connected to the work state calculation device for determining whether a labor condition of the driver of the vehicle of the transportation company fulfills a condition provided by a labor standard law based on the work state data calculated by the work state calculation device;
- a work state monitoring and controlling device connected to the work state calculation device for monitoring a state of a driver and notifying a current state of the driver to the labor standard law compliance determination device;
- a storage device for recording determination results determined by the labor standard law compliance determination device and/or the work state data of the work state calculation device; and
- a presentation device connected to the digital tachograph body capable of presenting automatically at least one determination result determined by the labor standard law compliance determination device before breaching the labor standard law, the at least one determination result relating to any one of items of on-duty time, residual on-duty time, rest period, residual rest period, driving time, residual driving time, continuous driving time, residual continuous driving time, break time, residual break time, total break time, residual break time necessary for cessation of driving, holiday acquisition, and time limit of holiday acquisition.

5. The digital tachograph according to any of claims 1 to 4,
wherein calculation of the condition for fulfilling the condition provided by the labor standard law of the driver of the vehicle of the transportation company is performed successively.

6. The digital tachograph according to any of claims 1 to 4,
wherein calculation of the condition for fulfilling the condition provided by the labor standard law of the driver of the vehicle of the transportation company is performed every predetermined time interval.

7. The digital tachograph according to any of claims 1 to 4,
wherein the presentation device comprises a monitor for displaying on a screen and a sound presentation device for presenting in electronic sound or voice.

8. The digital tachograph according to any of claims 1 to 4,
wherein the labor standard law compliance determination device can set up a labor condition within limits provided by the labor standard law for each driver of the vehicle of the transportation company.
